# EUROPEAN PATENT SPECIFICATION

(11) **EP 4 109 686 B1**
(45) Date of publication and mention of the grant of the patent: **09.07.2025**
(21) Application number: 21771459.1
(22) Date of filing: 16.03.2021
(51) Int. Cl.: H01R 29/00, H01H 9/00, H02J 7/36

(54) **ELECTRIC ENERGY SWITCHING ASSEMBLY, TOOL WITH ELECTRIC ENERGY SWITCHING ASSEMBLY AND SYSTEM**
ELEKTRISCHE ENERGIESCHALTANORDNUNG, WERKZEUG MIT ELEKTRISCHER ENERGIESCHALTANORDNUNG UND SYSTEM
ENSEMBLE DE COMMUTATION D'ÉNERGIE ÉLECTRIQUE, OUTIL AVEC ENSEMBLE DE COMMUTATION D'ÉNERGIE ÉLECTRIQUE ET SYSTÈME

(30) Priority: 17.03.2020 CN 202010186774; 17.03.2020 CN 202010194193; 17.03.2020 CN 202010186739; 17.03.2020 CN 202010187354; 17.03.2020 CN 202010186781
(43) Date of publication of application: 28.12.2022
(73) Proprietor: Globe (Jiangsu) Co., Ltd., Changzhou, Jiangsu 213023 (CN)
(72) Inventor: LU, Chuntao, hangzhou, Jiangsu 213023 (CN); YAN, An, hangzhou, Jiangsu 213023 (CN)
(74) Representative: Bergenstråhle & Partners AB
(86) International application number: PCT/CN2021/080950
(87) International publication number: WO 2021/185228

(56) References cited:
- EP-A1- 3 660 949
- CN-A- 101 924 379
- CN-A- 109 301 145
- CN-A- 111 243 879
- CN-A- 111 261 434
- CN-A- 111 262 107
- CN-A- 111 463 884
- CN-A- 111 933 837
- CN-U- 202 142 749
- CN-U- 207 251 228
- JP-A- 2017 045 679
- US-A- 4 325 107
- US-A1- 2009 108 806
- US-A1- 2011 250 484

## Description

### TECHNICAL FIELD

The invention relates to the field of garden tools technology, and more particularly to a power switching device, according to the preamble of claim 1, and applications thereof. Such a power switching device is known from US 4 325 107 A.

### BACKGROUND

In the garden machinery and power tool industries, power tools usually have a rated working voltage, that is, tools of different rated voltages need battery packs with different rated voltages to provide power. In order to solve the above problems, there is a battery pack which can realize two voltages switching in the existing market.

In the prior art, the voltage regulation structure of the dual-voltage battery pack is integrated on the battery pack, and the voltage selection is realized through different external plugs (male plugs), so that the battery pack can output different voltages. In the field of large-volume battery or backpack battery, the tool and the battery are not directly plugged in, but connected through a power cord, so that it is inconvenient to realize different voltage outputs through different male plugs.

### SUMMARY

A power switching device according to the invention is disclosed by independent claim 1 and further embodiments are disclosed by the dependent claims 2 to 5.

The present invention also discloses an electric energy storage system as defined by claim 6 and a further embodiment in dependent claim 7.

Furthermore, the present invention also discloses an electric power tool as defined by claim 8.

In summary, the power switching device of the present invention can realize the output of different voltages by the switching member moving between a first position and a second position, the plug connected with the switching member, and the switching of the coupling form of different plugs. Meanwhile, the power switching device can also enable an electric power tool with the power switching device to match many power supply devices with different output voltages, which effectively increases the applicable range of the electric energy storage system/power tool/electric tool system with the power switching device, and reduces cost.

### BRIEF DESCRIPTION OF THE DRAWINGS

FIGS. 1 to 13 disclose the power switching device, the electric energy storage system and electric tool of the present invention. FIGS. 14 to 81 do not form a part of the invention but is useful for understanding the invention.
FIG. 1 is a perspective schematic view of an electric energy storage system..
FIG. 2 is a schematic structural view of the electric energy storage system in FIG. 1 without a power switching device and part of a casing.
FIG. 3 is a perspective schematic view of the power switching device in FIG. 1.
FIG. 4 is a schematic exploded view of the power switching device in FIG. 1.
FIG. 5 is a schematic exploded view of the switching member in FIG. 4.
FIG. 6 is a schematic assembled structural view of the power switching assembly and the plug when the power switching device is in a first position.
FIG. 7 is a schematic assembled structural view of the power switching assembly of FIG. 6 when the elastic member is omitted.
FIG. 8 is a schematic connection structural view of the plug when the power switching device is in a first position.
FIG. 9 is a schematic circuit diagram of the electric energy storage system when the power switching device is in a first position.
FIG. 10 is a schematic assembled structural view of the power switching assembly and the plug when the power switching device is in a second position and the elastic member is omitted.
FIG. 11 is a schematic connection structural view of the plug when the power switching device is in a second position.
FIG. 12 is a schematic structural circuit diagram of the electric energy storage system when the power switching device is in a second position.
FIG. 13 is a partial enlargement view of a connecting position of the switching portion and the switching member in FIG. 4.
FIG. 14 is a perspective schematic view of an electric energy storage system.
FIG. 15 is a schematic structural view of the power switching device in FIG. 14 from another angle.
FIG. 16 is a schematic exploded view of the power switching device in FIG. 14.
FIG. 17 is a schematic structural view of the power switching assembly in FIG. 14.
FIG. 18 is a schematic assembled structural view of the power switching assembly and the plug in FIG. 14.
FIG. 19 is a schematic exploded structural view of a second switching member in FIG. 14.
FIG. 20 is a schematic assembled structural view of the second switching member and the plug in FIG. 14.
FIG. 21 is a schematic structural circuit diagram of the electric energy storage system in FIG. 14.
FIG. 22 is a schematic structural circuit diagram of the electric energy storage system when the power switching device is in a first position.
FIG. 23 is a schematic structural circuit diagram of the electric energy storage system when the power switching device is in a second position.
FIG.24 is a perspective schematic view of an electric energy storage system.
FIG. 25 is a schematic structural view of the power switching device in FIG. 24 from another angle.
FIG. 26 is a schematic exploded structural view of the power switching device in FIG. 25.
FIG. 27 is a schematic assembled structural view of the power switching assembly and the plug in FIG. 26.
FIG. 28 is a schematic assembled structural view of the power switching assembly and the plug in FIG. 27 from another angle.
FIG. 29 is a schematic assembled structural view of the power switching assembly, the plug and the energy unit in FIG. 27.
FIG. 30 is a perspective schematic view of an electric energy storage system.
FIG. 31 is a perspective schematic view of the power switching device in FIG. 30 from another angle.
FIG. 32 is a schematic exploded structural view of the power switching device in FIG. 31.
FIG. 33 is a schematic assembled structural view of the power switching assembly and the plug in FIG. 32.
FIG. 34 is a schematic assembled structural view of the power switching assembly, the plug and the energy unit in FIG. 32.
FIG. 35 is a schematic circuit diagram of the electric energy storage system when the power switching device in FIG. 31 is in an initial position.
FIG. 36 is a schematic structural circuit diagram of the electric energy storage system when the power switching device in FIG. 31 is in a first position.
FIG. 37 is a schematic structural circuit diagram of the electric energy storage system when the power switching device in FIG. 31 is in a second position.
FIG. 38 is a perspective schematic view of an electric energy storage system.
FIG. 39 is a schematic exploded structural view of the power switching device in FIG. 38.
FIG. 40 is a schematic assembled structural view of the power switching assembly and the plug in FIG. 39.
FIG. 41 is a schematic structural view of the switching member in the first position in FIG. 40.
FIG. 42 is a schematic structural circuit diagram of the electric energy storage system in FIG. 39.
FIG. 43 is a schematic structural circuit diagram of the electric energy storage system when the power switching device in FIG. 39 is in a first position.
FIG. 44 is a schematic structural circuit diagram of the electric energy storage system when the power switching device in FIG. 39 is in a second position.
FIG. 45 is a perspective schematic view of an electric energy storage system.
FIG. 46 is a perspective schematic view of the power switching device in FIG. 45 from another angle.
FIG. 47 is a schematic exploded structural view of the power switching device in FIG. 45.
FIG. 48 is a schematic assembled structural view of the power switching assembly and the plug in FIG. 47.
FIG. 49 is a schematic circuit diagram of the electric energy storage system when the power switching device in FIG. 46 is in an initial position.
FIG. 50 is a schematic structural circuit diagram of the electric energy storage system when the power switching device in FIG. 46 is in a first position.
FIG. 51 is a schematic structural circuit diagram of the electric energy storage system when the power switching device in FIG. 46 is in a first position.
FIG.52 is a perspective schematic view of an electric energy storage system.
FIG. 53 is a perspective schematic view of the power switching device in FIG. 52 from another angle.
FIG. 54 is a schematic exploded structural view of the power switching device in FIG. 53.
FIG. 55 is a schematic exploded structural view of the power switching assembly in FIG. 54.
FIG. 56 is a schematic circuit diagram of the electric energy storage system when the power switching device in FIG. 53 is in a first position.
FIG. 57 is a schematic structural circuit diagram of the electric energy storage system when the power switching device in FIG. 56 is in a first position.
FIG. 58 is a schematic circuit diagram of the electric energy storage system when the power switching device in FIG. 53 is in a second position.
FIG. 59 is a schematic structural circuit diagram of the electric energy storage system when the power switching device in FIG. 58 is in a second position.
FIG. 60 is a perspective schematic view of an electric energy storage system.
FIG. 61 is a perspective schematic view of the power switching device in FIG. 60 from another angle.
FIG. 62 is a schematic exploded structural view of the power switching device in FIG. 61.
FIG. 63 is a schematic assembled structural view of the power switching assembly and the plug in FIG. 62.
FIG. 64 is a schematic circuit diagram of the electric energy storage system when the power switching device in FIG. 61 is in a first position.
FIG. 65 is a schematic structural circuit diagram of the electric energy storage system when the power switching device in FIG. 64 is in a first position.
FIG. 66 is a schematic circuit diagram of the electric energy storage system when the power switching device in FIG. 61 is in a second position.
FIG. 67 is a schematic structural circuit diagram of the electric energy storage system when the power switching device in FIG. 66 is in a second position.
FIG. 68 is a perspective schematic view of an electric energy storage system.
FIG. 69 is a perspective schematic view of the power switching device in FIG. 68 from another angle.
FIG. 70 is a schematic exploded structural view of the power switching device in FIG. 69.
FIG. 71 is a schematic assembled structural view of the power switching assembly and the plug in FIG. 70.
FIG. 72 is a schematic circuit diagram of the electric energy storage system when the power switching device in FIG. 69 is in a first position.
FIG. 73 is a schematic structural circuit diagram of the electric energy storage system when the power switching device in FIG. 72 is in a first position.
FIG. 74 is a schematic circuit diagram of the electric energy storage system when the power switching device in FIG. 69 is in a second position.
FIG. 75 is a schematic structural circuit diagram of the electric energy storage system when the power switching device in FIG. 74 is in a second position.
FIG. 76 is a schematic exploded structural view of a power switching device in an electric energy storage system.
FIG. 77 is a schematic structural view of the power switching assembly and the plug in FIG. 76.
FIG. 78 is a schematic structural view of the electric energy storage system without the power switching device and part of the casing.
FIG. 79 is a schematic structural view of the electric energy storage system without the power switching device and part of the casing.
FIG. 80 is a perspective schematic view of a power tool system.
FIG. 81 is a perspective schematic view of another electric energy storage system of an electric tool system.

### DETAILED DESCRIPTION OF EMBODIMENTS

The following describes the implementation of the invention through specific examples, and those skilled in the art can easily understand other advantages and effects from the content disclosed in this specification. The invention can also be implemented or applied through other different specific embodiments, and various details in the specification can also be modified or changed based on different viewpoints and applications without departing from scope of the invention as defined by the appended claims.

It should be noted that, the drawings disclosing the embodiments only illustrate the basic idea of the invention in a schematic manner. The drawings only show the components related to the invention instead of the number, shape, and dimension of the components in actual implementation. The form, number, and scale of each component can be changed at will during actual implementation, and the component layout may also be more complicated.

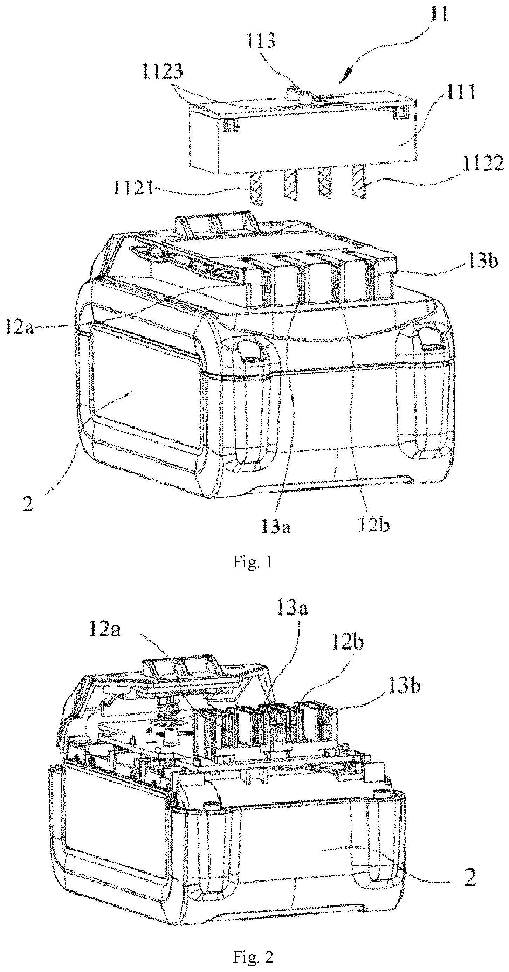

As shown in FIG. 1 to FIG. 2, an electric energy storage system is provided. The electric energy storage system includes a first energy unit (not labeled), a second energy unit (not labeled), and a power switching device 11 which is used for achieving electrical energy output.

As shown in FIG. 2, voltages of the first energy unit and the second energy unit may be nV, and the first energy unit can include a positive electrode 12a and a negative electrode 12b for electrical energy output. The second energy unit can include a positive electrode 13a and a negative electrode 13b for electrical energy output. The electric energy storage system further includes a casing 2 for housing the first energy unit and the second energy unit. The positive electrodes 12a, 13a and the negative electrodes 12b, 13b are disposed in the casing 2 and exposed to outside of the casing 2 so as to be connected to the power switching device 11, and according to the invention the positive electrodes 12a, 13a and the negative electrodes 12b, 13b may have at least 3 types of arrangement structures.

As shown in FIG. 1, the power switching device 11 is a switching device moving between the first position and the second position while is pressed. The power switching device 11 can include a housing 111, a plug 112 housed in the housing 111, and a power switching assembly 113. The power switching assembly 113 is adjustable and can be connected to the plug 112.

As shown in FIG. 1, the housing 111 is provided with a housing space (not labeled) for accommodating the plug 112 and the power switching assembly 113. The plug 112 includes a first plug member 1121 and a second plug member 1122 for electrically connecting the first energy unit and the second energy unit, and an output terminal 1123 for realizing electrical energy output. The first plug member 1121, the second plug member 1122 and the output terminal 1123 are all connected and installed in the housing space.

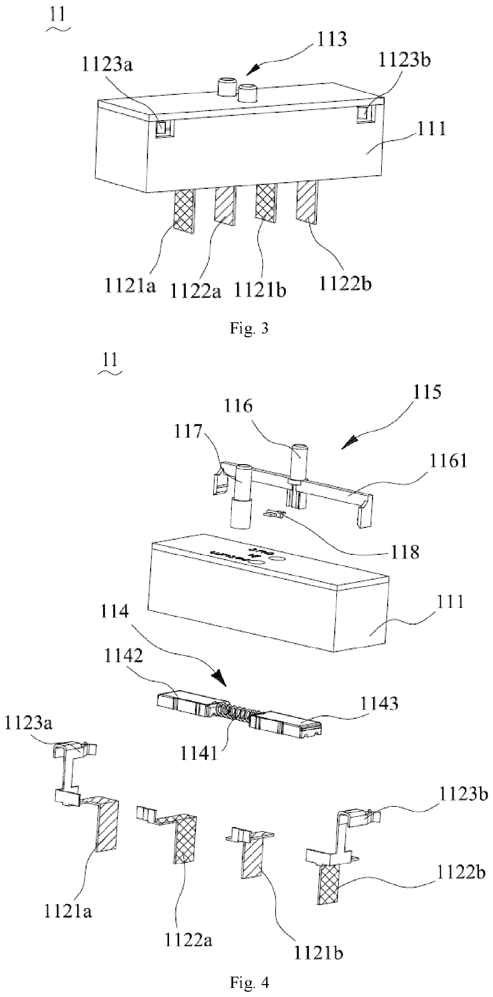

As shown in FIG. 3, each of the first plug member 1121 and the second plug member 1122 may include a positive terminal (1121a, 1122a) and a negative terminal (1121b, 1122b). The output terminal 1123 may include a positive output terminal 1123a and a negative output terminal 1123b. The output terminal 1123 is connected to the first plug member 1121 and the second plug member 1122 individually, that is, the positive terminal 1121a of the first plug member 1121 or the positive terminal 1122a of the second plug member 1122 is electrically connected to the positive output terminal 1123a of the output terminal 1123, the negative terminal 1121b of the first plug member 1121 or the negative terminal 1122b of the second plug member 1122 is electrically connected to the negative output terminal 1123b of the output terminal 1123 to ensure that the power supply devices is connected to the first plug member 1121 and the second plug member 1122 to realize the output of electrical energy through the output terminal 1123.

As shown in FIGS. 1 and 3, the positive terminals and the negative terminals 1121a, 1122a, 1121b, 1122b of the first plug member 1121 and the second plug member 1122 may be male plugs arranged in a sheet shape, and ends of each male plug are located on the same line. Two terminals with the same polarity of the first plug member 1121 and the second plug member 1122 are arranged side by side; further, the output terminal 1123 is a female plug arranged substantially parallel to the first plug member 1121 and the second plug member 1122. The output terminal 1123 and the first plug member 1121 and the second plug member 1122 respectively are arranged on two different side walls of the housing 111, so as to facilitate the connection of the first plug member 1121, the second plug member 1122 and the output terminal 1123.

As shown in FIG. 3, the positive terminals 1121a, 1122a and negative terminals 1121b, 1122b of the first plug member 1121 and the second plug member 1122 can also be arranged in front and back or up and down, etc., which is different from the linear arrangement. And the configuration of the first plug member 1121, the second plug member 1122, and the output terminal 1123 can be adjusted according to the specific structure of the power switching assembly 113; that is, according to the invention, the arrangement form and setting form of the first plug member 1121, the second plug member 1122 and the output terminal 1123 can be selected according to actual needs.

As shown in FIGS. 4 to 5, the power switching assembly 113 includes a switching member (also referred to as switcher) 114 and a control member (also referred to as controller) 115. The switching member 114 is used to electrically connect the first plug member 1121 and the second plug member 1122 and can switch the electrical coupling form of the first plug member 1121 and the second plug member 1122. Specifically, the switching member 114 is housed in the housing 111, and the housing 111 is provided with a rail/chute structure (not shown) for housing the switching member 114, and the switching member 114 is slidably connected in the track/chute structure and can move between the first position and the second position along the track/chute structure under the action of the control member 115. Furthermore the switching member 114 can adjust the coupling form of the first plug member 1121 and the second plug member 1122.

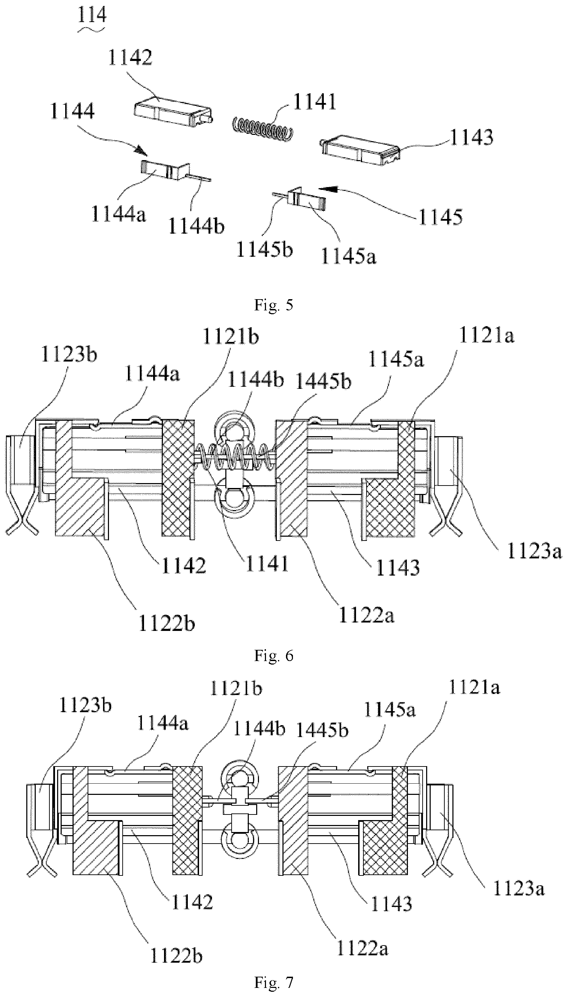

As shown in FIG. 5, the switching member 114 includes an elastic member 1141, a first switching member 1142 and a second switching member 1143. The first switching member 1142 and the second switching member 1143 are connected by an elastic member 1141. The first switching member 1142 is provided with a first connection end 1144 and a protrusion (not numbered) for connecting the elastic member 1141. The first connection end 1144 can include a first connecting portion 1144a for connecting the first plug member 1121 and/or the second plug member 1122 and a second connecting portion 1144b extending toward the second switching member 1143 so as to connect the second switching member 1143.

As shown in FIG. 5, the second switching member 1143 can include substantially the same structure as the first switching member 1142, that is, the second switching member 1143 is provided with a second connection end 1145 and a protrusion (not labeled) toward the first switching member 1142. The second connection end 1145 can also include a third connecting portion 1145a for connecting the first plug member 1121 and/or the second plug member 1122 and a fourth connecting portion 1145b extending toward the first switching member 1142 so as to connect the first switching member 1142. Preferably, the first connection end 1144 and the second connection end 1145 are both integrally formed, and are in an "L" shape and respectively wrapped on outer walls of the first switching member 1142 and the second switching member 1143.

As shown in FIGS. 5-7, the elastic member 1141 is connected between the first switching member 1142 and the second switching member 1143 by a protrusion. It is defined that when the elastic member 1141 is in a natural extension state, the switching member 114 is in a first position; when the switching member 114 is in the first position, the first connecting portion 1144a of the first connection end 1144 and the negative terminals 1121b and 1122b of the first plug member 1121 and the second plug member 1122 are electrically connected, so as to make the positive electrodes 12a and 13a of the first energy unit and the second energy unit be electrically connected; the positive terminals 1121a and 1122a of the first plug member 1121 and the second plug member 1122 are electrically connected through the third connecting portion 1145a of the second switching member 1143, so as to make the negative electrodes 12b and 13b of the first energy unit and the second energy unit are electrically connected. At this time, the second connecting portion 1144b is arranged separately to the fourth connecting portion 1145b.

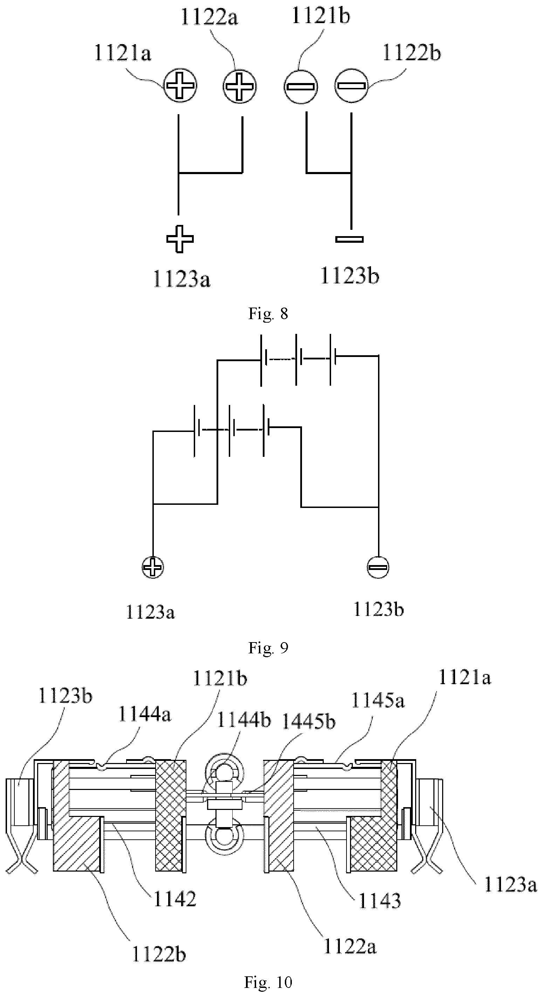

As shown in FIGS. 8-9, the positive output terminal 1123a of the output terminal 1123 is electrically connected to the positive terminal 1121a or the positive terminal 1122a through an electrical connection structure such as a wire; the negative output terminal 1123b is electrically connected to the negative terminal 1121b or the negative terminal 1122b through an electrical connection structure such as a wire, so that the first energy unit and the second energy unit are connected in parallel, and a low voltage (ie, nV) output is realized through the output terminal 1123.

As shown in FIGS. 6 and 10, when the elastic member 1141 is in a compressed state under the control of the control member 115, the switching member 114 is in a second position, and thereby when the switching member 114 is in the second position, the second connecting portion 1144b of the first switching member 1142 is connected to the fourth connecting portion 1145b in the second switching member 1143, so that the first switching member 1142 and the second switching member 1143 are connected into one conductive unity through the second connecting portion 1144b and the fourth connecting portion 1145b. Two adjacent terminals of the first plug member 1121 and the second plug member 1122 with opposite polarities are electrically connected through the first switching member 1142 and the second switching member 1143, that is, at this time, the first connecting portion 1144a is separated from the positive terminal 1121a of the first plug member 1121, the third connecting portion 1145a is separated from the negative terminal 1122b of the second plug member 1122, and the adjacent negative terminal 1121b and positive terminal 1122a are electrically connected through the first connecting portion 1144a, the third connecting portion 1145a, and the assembly of the second connecting portion 1144b and the fourth connecting portion 1145b.

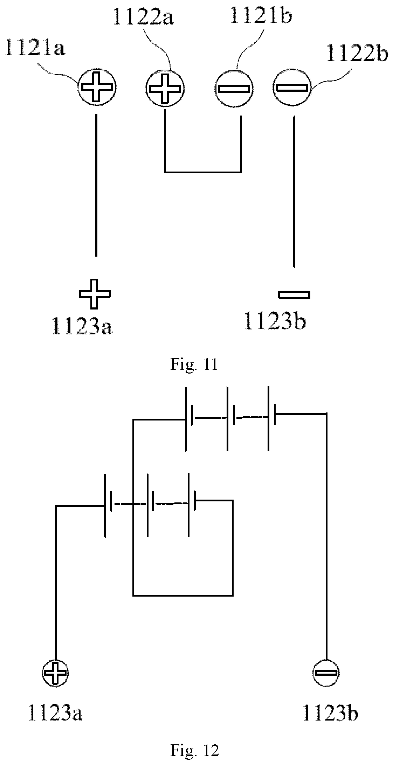

As shown in FIGS. 11-12, the positive output terminal 1123a of the output terminal 1123 is electrically connected to the positive terminal 1121a through an electrical connection structure such as a wire, and the negative output terminal 1123b is electrically connected to the negative terminal 1122b through an electrical connection structure such as a wire. In this way, the first energy unit and the second energy unit are connected in series, and a high-voltage (i.e., 2nV) output is realized through the output terminal 1123.

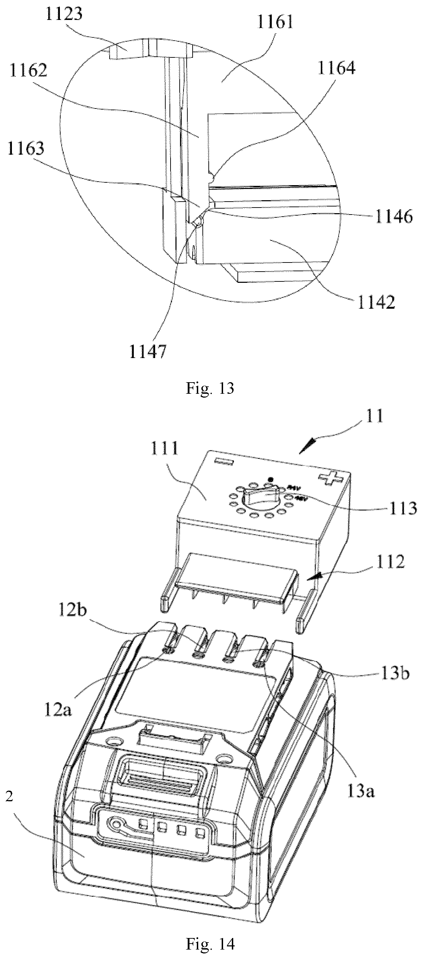

As shown in FIGS. 4 and 13, the control member 115 is used to drive the switching member 114 to move in the track/chute structure, so that the switching member 114 can be switched between the first position and the second position. The control member 115 includes a switching button 116, a reset button 117, and a rotary shaft 118. The rotary shaft 118 is used for connecting the switching button 116 and the reset button 117 back and forth.

As shown in FIG. 13, the switching button 116 is used to control the switching member 114 to slide between the first position and the second position. The switching button 116 can include an initial position corresponding to the first position and a switching position corresponding to the second position. Further, the switching button 116 includes a pressing portion and a switching portion 1161 connected to the pressing portion. The pressing portion penetrates the housing 111 to drive the switching portion 1161 to move between the initial position and the switching position under the pressing action.

As shown in FIG. 13, the switching portion 1161 is formed to extend outward along an extension direction perpendicular to the pressing portion. The switching portion 1161 can include two snapping arms 1162. The two snapping arms 1162 extend toward the switching member 114, and are arranged parallel to each other. A distance between the two snapping arms 1162 is smaller than a length of the switching member 114 at the first position.

As shown in FIGS. 4 and 13, when the switching button 116 is in the initial position, the two snapping arms 1162 are both located above the switching member 114, and the switching member 114 is in the first position; when the switching button 116 is moved to the switching position while is pressed, the switching member 114 is snapped between the two snapping arms 1162, and is in the second position.

As shown in FIGS. 4 and 13, an end of each snapping arm 1162 is provided with an inclined guide surface 1163 facing the switching member 114, and the first switching member 1142 and the second switching member 1143 are provided with a resisting surface 1146 corresponding to the inclined guide surface 1163. In this way, when the switching button 116 is pressed to move from the initial position to the switching position, the snapping arms 1162 can slide along the inclined guide surface 1163 and two away side walls of the first switching member 1142 and the second switching member 1143, and is snapped on two away side walls of the switching member 114 in the longitudinal direction.

As shown in FIG. 13, two away side walls of the first switching member 1142 and the second switching member 1143 are both provided with position limiting structures 1147, and the snapping arms 1162 is provided with positioning structures 1164 corresponding to the limiting structures 1147. With this arrangement, when the switching button 116 is moved to the switching position, the separation of the switching button 116 and the switching member 114 can be effectively prevented, and the clamping stability between the switching button 116 and the switching member 114 can be ensured. The limiting structure 1147 is a limiting groove, and the positioning structure 1164 is a positioning protrusion corresponding to the limiting groove.

As shown in FIG. 4, the reset button 117 penetrates through the housing 111 to control the switching button 116 from the switching position back to the initial position by the rotary shaft 118 while is pressed. The rotating shaft 118 is partially housed in the housing space of the housing 111, and the rotating shaft 118 includes a positioning shaft, a first fin and a second fin. The positioning shaft is rotatably fixed in the housing 111. The first fin and the second fin extend outward from a radial direction of the positioning shaft and are located on the same plane. The switching button 116 is provided with a first resisting groove corresponding to the first fin, and the reset button 117 is provided with a second resisting groove corresponding to the second fin.

As shown in FIG. 4, when the switching button 116 is in the initial position, the rotary shaft 118 is in a freely rotating state, and the reset button 117 can move up and down along its extension direction; and at this time, the switching member 114 is in the first position, and the first energy unit and the second energy unit are connected in parallel, and the electric energy storage system 10 can realize a low voltage (i.e., nV) output.

As shown in FIGS. 4 and 13, when the switching button 116 moves from the initial position to the switching position, the first resisting groove drives the first fin to rotate around the positioning shaft, so that the second fin abuts against the second resisting groove, so as to drive the reset button 117 and the switching button 116 to move in opposite directions. When the switching button 116 is positioned at the switch position, the switching portion 1161 of the switching button 116 is snapped at both ends of the switching member 114 in the longitudinal direction, and the positioning structure 1164 on the snapping arm 1162 and the limiting structure on the switching member 114 are snapped each other to limit the switching position of the switching button 116 and drive the switching member 114 to move from the first position to the second position. The reset button 117 is snapped and positioned between the housing 111 and an end of the second fin, and At this time, the switching member 114 is in the second position, the first energy unit and the second energy unit are connected in series, and the electric energy storage system can realize a high-voltage (i.e., 2nV) output.

As shown in FIGS. 4 and 13, when controlling the switching button 116 to move back to the initial position, the reset button 117 is pressed, and drives the second fin and the first fin through the second resisting groove to rotate around the positioning shaft, the first fin drives the switching button 116 to move from the switching position to the initial position, so that the limiting structure is separated from the positioning structure. The switching portion 1161 is disengaged from an end of the switching member 114, which further drives the switching member 114 to move from the second position back to the first position, and the switching of the coupling state of the first plug member 1121 and the second plug member 1122 by the power switching assembly 113 is completed.

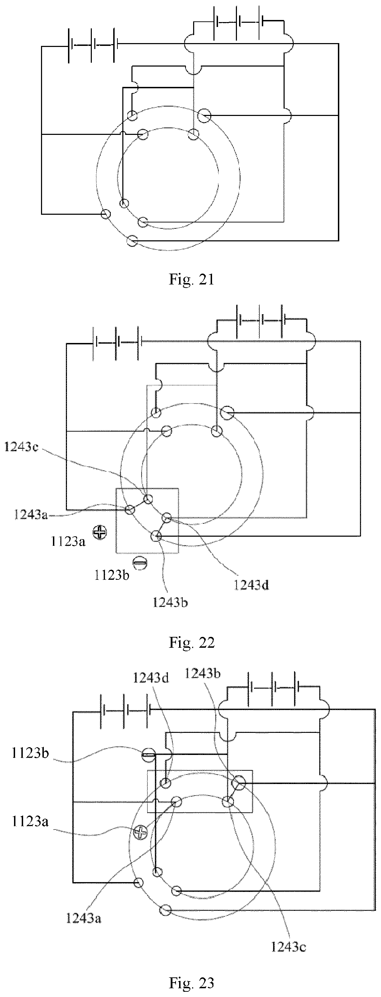

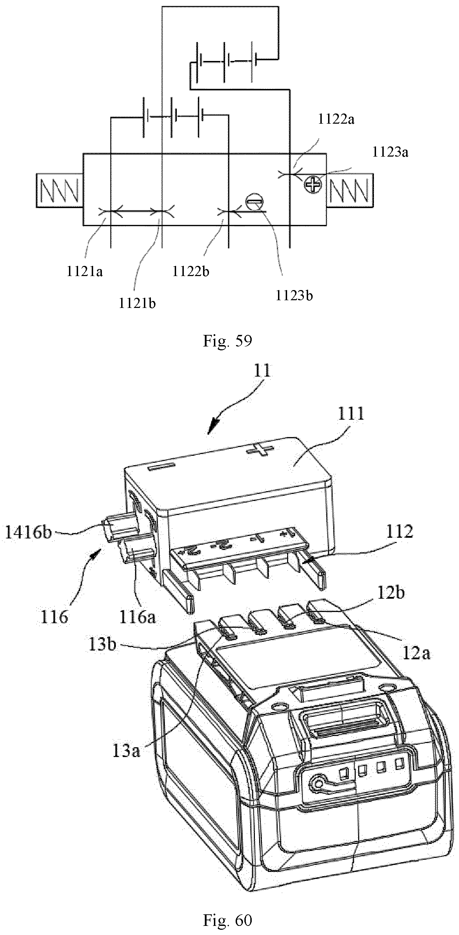

The embodiments shown below in FIGS. 14 to 81 do not form a part of the present invention but are useful for the understanding.

As shown in FIGS. 2 and 14, an electric energy storage system is further provided. The electric energy storage system can include substantially the same structure as the previous embodiment. The difference is that the power switching device 11 is a switching device that can realize the switching between the first position and the second position by rotating a turntable. The following description will describe the differences in detail, and the similar/same parts will not be repeated here.

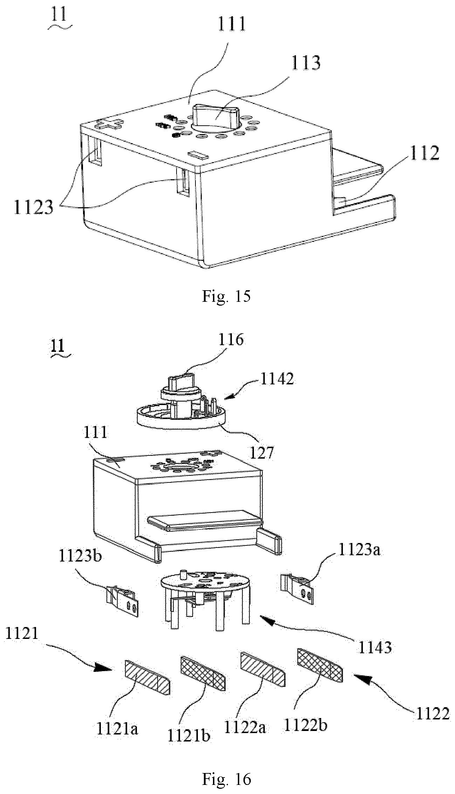

As shown in FIGS. 15-16, the power switching device 11 can include a housing 111, a plug 112 housed in the housing 111, and a power switching assembly 113. The power switching assembly 113 is adjustable and connected to the plug 112. Similarly, the plug 112 includes a first plug member 1121 and a second plug member 1122 for electrically connecting the first energy unit and the second energy unit, and an output terminal 1123 for realizing electrical energy output, and each of the first plug member 1121 and the second plug member 1122 can include a positive terminal (1121a, 1122a) and a negative terminal (1121b, 1122b), and the output terminal 1123 can include a positive output terminal 1123a and a negative output terminal 1123b.

As shown in FIG. 16, the power switching assembly 113 includes a switching member (not labeled) and a control member (not labeled). The switching member is used to be electrically connected between the first plug member 1121 and the second plug member 1122, and can switch coupling form of the first plug member 1121 and the second plug member 1122. Specifically, the switching member is housed in the housing 111, and can be rotated in the housing 111 and moved between the first position and the second position under the action of the control member, so as to further adjust the coupling form of the first plug member 1121 and the second plug member 1122.

As shown in FIG. 16, the switching member includes a first switching member 1142 and a second switching member 1143. The first switching member 1142 is connected to the control member. The second switching member 1143 is electrically connected to the plug 112. The first switching member 1142 can be driven by the control member to rotate around the axis of the control member, so as to switch the connection form of the plug 112 in a coupled state.

As shown in FIGS. 16-17, the first switching member 1142 penetrates the control member, and can include a connecting portion (not labeled) for connecting the second switching member 1143 and a transmission portion (not labeled) for power transmission. The connecting portion exposes out from a lower surface of the control member to be electrically connected to the second switching member 1143. The transmission portion protrudes outward from an upper surface of the control member to be electrically connected to the output terminal 1123, and realizes the transmission of electric energy.

As shown in FIG. 16, a plurality of first switching members 1142 are provided at the same time, and the plurality of first switching members 1142 are arranged on the control member in a staggered manner, so as to realize the switching of the coupling form of the first plug member 1121 and the second plug member 1122. The first switching member 1142 is provided with at least two structures for being electrically connected to the second switching member 1143. And in this embodiment, the first switching member 1142 is provided with a first switching sub-member 1142a with a long-circle connecting portion and a second switching sub-member 1142b with a circle connecting portion. An extension height of the transmission portion of the first switching sub-member 1142a is higher than an extension height of the transmission portion of the second switching sub-member 1142b, so that the extensions of the first switching sub-member 1142a and the second switching sub-member 1241b are arranged in an up-and-down position, and the output terminal 1123 realizes the output of electric energy.

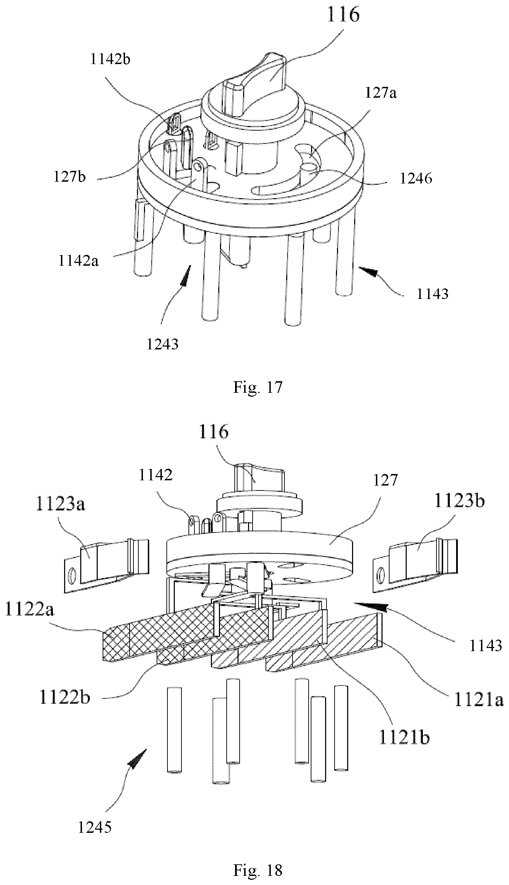

As shown in FIG. 17, the second switching member 1143 can include a connection end 1243 for connecting the plug 112, a chassis 1244 for fixing the connection end 1243, and supporting portions 1245 for supporting the connection end 1243 and the chassis 1244. One end of the connection end 1243 is electrically connected to the plug 112, and another end penetrates the chassis 1244 and exposed on a side of the chassis 1244 facing the first switching member 1142 to be electrically connected to the first switching member 1142.

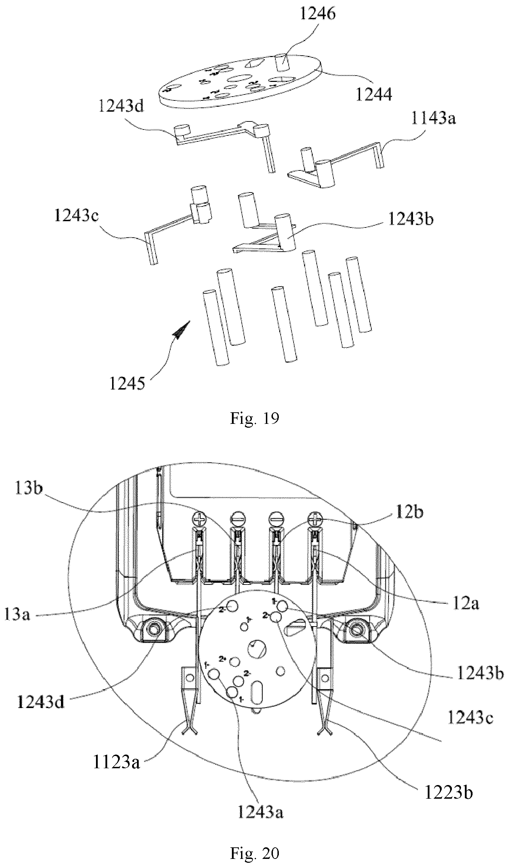

As shown in FIG. 19, the connection end 1243 is provided with a first connection end 1243a, a second connection end 1243b, a third connection end 1243c, and a fourth connection end 1243d that are disposed in a staggered manner and in a direction perpendicular to the chassis 1244, and the four connection ends 1243 are electrically connected to the positive terminal 1121a, the negative terminal 1121b, the positive terminal 1122a, and the negative terminal 1122b respectively. Further, each connection end 1243 can include two contacts, the two contacts is located on a end that penetrates the chassis 1244 and is exposed on one side of the chassis 1244 close to the first switching member 1142. The contacts on different connection ends 1243 are arranged in a staggered manner.

As shown in FIGS. 18-19, the supporting portions 1245 may be evenly distributed on the bottom of the chassis 1244. The chassis 1244 is in a round-shape, and the supporting portions 1245 can be provided with six at the same time, and the six supporting portions 1245 are evenly arranged along the circumference of the chassis 1244, so as to support the chassis 1244 and make the connection ends 1243 electrically connect the plug 112.

As shown in FIG. 18, the control member is provided with a switching button 116 penetrating through the housing 111 and a trigger unit 127 housed in the housing 111. The trigger unit 127 is connected to the switching button 116 to drive the switching member connected to the trigger unit 127 to rotate.

As shown in FIG. 17, the switching button 116 is arranged in a cylindrical-shape. The trigger unit 127 and the switching button 116 are integrally formed. The first switching member 1142 is connected and installed on the trigger unit 127. The first switching sub-member 1142a and the second switching sub-member 1142b are disposed on the trigger unit 127 in a staggered manner. In this embodiment, the trigger unit 127 and the chassis 1244 are both arranged in a circular plate shape. Further, the trigger unit 127 is provided with a limiting slot 127a, and the chassis 1244 of the second switching member 1143 is provided with a limiting protrusion 1246 corresponding to the limiting slot 127a. The limiting protrusion 1246 is received in the limiting slot 127a and slidable in the limiting slot 127a, so as to limit the moving position and distance of the first switching member 1142, control the first switching member 1142 to switch between the first position and the second position, and further ensure the stable connection between the connection end 1243 of the first switching member 1142 and the second switching member 1143. Furthermore, the trigger unit 127 is further provided with a clamping portion 127b. The clamping portion 127b is snapped and fixed with the housing 111. The control member is rotatably connected with the housing 111 through the clamping portion 127b, so as to limit the rotation position of the switching button 116.

As shown in FIGS. 15-16, the control member may include, for example, three switching positions. The three switching positions include the first position and the second position where the first plug member 1121, the second plug member 1122 and the output terminal 1123 are connected to achieve electrical energy output, and the initial position where the plug 112 of the power switching device 11 is in an open circuit state.

As shown in FIG. 16, when the power switching device 11 is in the initial position, any one of the first switching members 1142 cannot be connected to different plugs 112 at the same time. At this time, there is no coupling connection relationship between the first plug member 1121 and the second plug member 1122. The first energy unit and the second energy unit are in an open circuit state, and the electric energy storage system has no energy output.

As shown in FIG. 16, when the power switching device 11 is in the first position, the first switching member 1142 is driven by the trigger unit 127 to rotate on the chassis 1244, and is coupled and connected to the positive terminals 1121a, 1122a, and the negative terminals 1121b, 1122b through the cooperation of the connecting portion and the connection end 1243.

As shown in FIGS. 20-22, when the power switching device 11 is in the first position, the contacts of the first connection end 1243a and the third connection end 1243c are electrically connected to the positive terminals 1121a and 1122a through the first switching sub-member 1142a, the second connection end 1243b and the fourth connection end 1244d are electrically connected to the negative terminals 1121b and 1122b through another first switching sub-member 1142a. At this time, the first energy unit and the second energy unit are connected in parallel through the switching member and further realize a low voltage (i.e., nV) output through the positive output terminal 1123a and the negative output terminal 1123b of the output terminal 1123.

As shown in FIGS. 20-23, when the power switching device 11 is in the second position, the first switching member 1142 is driven by the trigger unit 127 to rotate on the chassis 1244, and is coupled and connected to the positive terminals 1121a, 1122a and the negative terminals 1121b, 1122b through the cooperation of the connecting portion and the connection end 1243. When the power switching device 11 is in the second position, the contacts of the second connection end 1243b and the third connection end 1243c are electrically connected to the positive terminal 1122a and negative terminal 1121b through the first switching sub-member 1142a; the contact of the first connection end 1243a is electrically connected to the positive terminal 1121a and the positive output terminal 1123a through the second switching sub-member 1142b; the contact of the fourth connection end 1243d is electrically connected to the negative terminal 1122b and the negative output terminal 1123b through the second switching sub-member 1142b. At this time, the first energy unit and the second energy unit are connected in series through the switching member, and further realize a high-voltage (i.e., 2nV) output through the output terminal 1123.

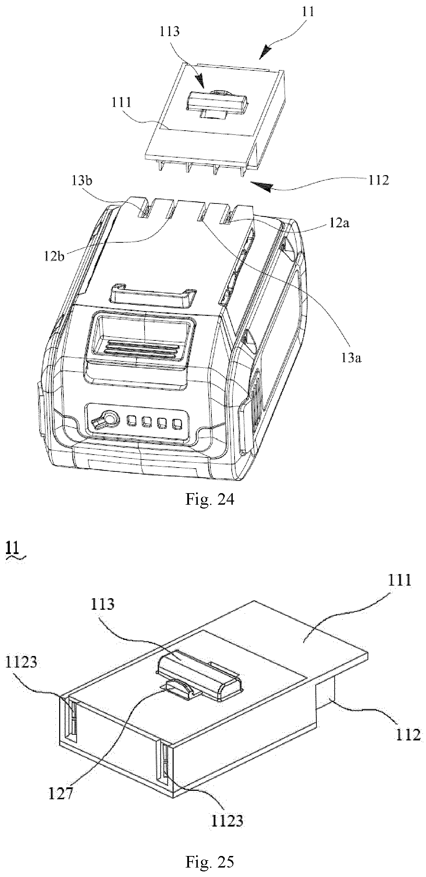

As shown in FIGS. 2 and 24, an electric energy storage system is further provided. The electric energy storage system has substantially the same structure as the previous embodiment. The difference is that the power switching device 11 realizes position switching of the first position and the second position by reciprocating the switching button (also referred as relative rotation of the switching button). The following description will describe the differences in detail, and the similar/same parts will not be repeated here.

As shown in FIGS. 25 to 26, the power switching device 11 is provided with a housing 111, a plug 112 housed in the housing 111, and a power switching assembly 113. The power switching assembly 113 is adjustable and connected to the plug 112. Similarly, the plug 112 includes a first plug member 1121 and a second plug member 1122 for electrically connecting the first energy unit and the second energy unit, and an output terminal 1123 for realizing electric energy output. The first plug member 1121, the second plug member 1122 are provided with positive terminals (1121a, 1122a) and negative terminals (1121b, 1122b), and the output terminal 1123 is provided with a positive output terminal 1123a and a negative output terminal 1123b.

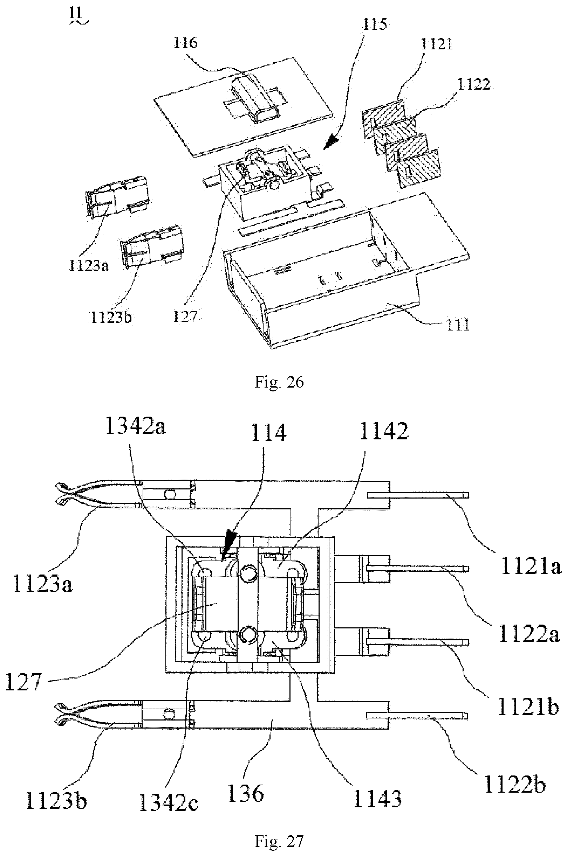

As shown in FIGS. 26-27, the power switching assembly 113 includes a switching member 114 and a control member 115. The switching member 114 is used to electrically connect the first plug member 1121 and the second plug member 1122. The switching member 114 can switch a coupling form of the first plug member 1121 and the second plug member 1122. Specifically, the switching member 114 is housed in the housing 111, and the switching member 114 is rotatably housed in the housing 111 through a rotating shaft 1341, and can rotate around the rotating shaft 1341 and swing between the first position and the second position under the action of the control member 115, so as to further adjust the coupling form of the first plug member 1121 and the second plug member 1122.

As shown in FIG. 27, the power switching assembly 113 further includes an intermediate connecting member 136. The intermediate connecting member 136 is used for connecting the switching member 114 with the first plug member 1121, the second plug member 1122, and the output terminal 1123, and the switching member 114 is rotatably connected in the intermediate connecting member 136 through the rotating shaft 1341. The intermediate connecting member 136 is provided with many intermediate connecting plates for connecting the first plug member 1121, the second plug member 1122 and/or the output terminal 1123. Each of intermediate connecting plates may be a metal intermediate connecting member made of conductive metal material. In addition, the switching member 114 is electrically connected to the first plug member 1121, the second plug member 1122, and the output terminal 1123 through the metal intermediate connecting member, so as to realize the power transmission of the power switching device 11.

As shown in FIGS. 27-28, the switching member 114 is a plate with a certain arc. The plate with a certain arc may be a warping plate or an arc-shaped plate, so that the plane where the switching member 114 is located on intersects the plane where the intermediate connecting member 136 is located on. The plane of. In this embodiment, the switching member 114 is driven by the power switching assembly 113 to rotate around the rotating shaft 1341, and both ends of the switching member 114 abut on the intermediate connecting member 136 and/or the assembly of the first plug member 1121 and the second plug member 1122, so as to realize the switching of the coupling form of the first plug member 1121 and the second plug member 1122. Further, an end of the switching member 114 is provided with protrusions (1342a, 1342c) for improving the electrical contact performance, and the protrusions are respectively disposed corresponding to the positive terminals 1121a and 1122a and the negative terminals 1121b and 1122b of the first plug member 1121 and the second plug member 1122.

As shown in FIGS. 27-28, the switching member 114 includes a first switching member 1142 and a second switching member 1143. The first switching member 1142 and the second switching member 1143 are arranged in parallel and side by side. The first switching member 1142 and the second switching member 1143 is fixedly connected through an arc-shaped connecting portion (not labeled), so that the switching member 114 is generally arranged in an "H" shape. Further, there are many protrusions and they are respectively located at the end of each switching member 114, and the protrusions on the same switching member 114 are symmetrically arranged related to the rotation axis of the rotating shaft 1341.

As shown in FIGS. 27-29, the control member 115 can rotate in the housing 111 to drive the switching member 114 to move between the first position and the second position. The control member 115 is a warping member arranged in a warping switch structure corresponding to the switching member 114. The control member 115 includes a switching button 116 provided on the housing 111, a trigger unit 127 provided corresponding to the switching button 116, and a driving section 139 that abuts against the switching member114. The switching button 116 is movably arranged on the housing 111, and the trigger unit 127 is fixed in the housing space of the housing 111 through a rotating shaft 1381, and is located below the switching button 116, so that the switching button 116 drives the trigger unit 127 to rotate around the shaft 1381. Further, the axis of the rotating shaft 1381 of the trigger unit 127 and the axis of the rotating shaft 1341 of the switching member 114 are located in the same plane or respectively located in two mutually parallel planes.

As shown in FIGS. 27-28, one end of the driving portion 139 abuts against the switching member 114, the other end is connected to the trigger unit 127, and the end of the driving portion 139 abutting against the switching member 114 is arranged in an arc-shape to ensure the driving portion 139 can closely abut against the arc-shaped connecting portion of the switching member 114 and drive the switching member 114 to rotate.

As shown in FIGS. 27-28, the trigger unit 127 includes a receiving hole (not shown) for accommodating the driving portion 139, and an elastic element (not shown) is disposed between the trigger unit 127 and the driving portion 139 and elastically connected to the trigger unit 127 and the driving portion 139. In this way, when the control member 115 abuts against the switching member 114, the driving portion 139 abuts against the switching member 114 along a side away from the trigger unit 127 under the action of the elastic element, so that the end/protrusion 1342 of the switching member 114 abuts and is tightly snapped on the plug 112/the intermediate connecting member 136 to ensure the stability of the power transmission of the power switching device 11 in the process of the rotation of the switching member 114 driven by the control member 115.

As shown in FIGS. 26-27, the control member 115 can include an initial position and a switching position corresponding to the first position and the second position. The switching position can be defined as a first switching position when the control member 115 controls the switching member 114 in the first position, the switching position can be defined as a second switching position when the control member 115 controls the switching member 114 in the second position.

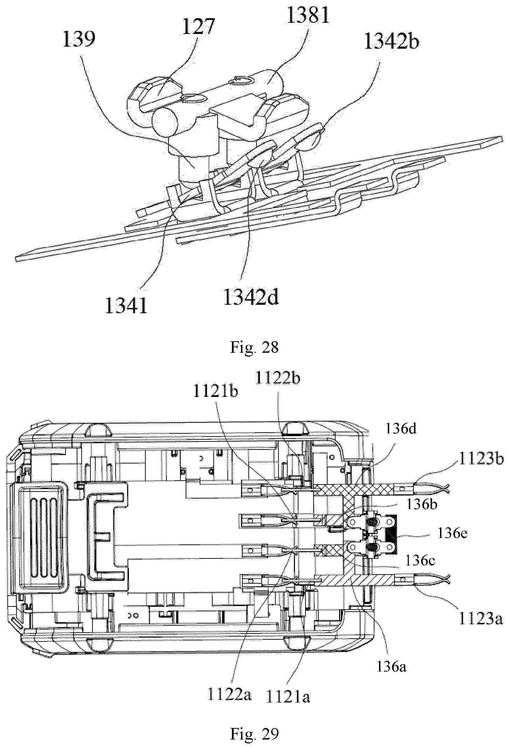

As shown in FIGS. 25 and 28, when the switching button 116 is in the initial position, the driving portion 139 abuts on the central axis of the switching member 114, so that the switching member 114 does not deflect and contact the plug 112. The positive electrodes 12a, 13a and the negative electrodes 12b, 13b of the first energy unit and the second energy unit connected to the plug 112 are in a disconnected state, and the electric energy storage system cannot transmit electrical energy out.

As shown in FIGS. 27-29, when the switching member 114 is rotated to the first switching position under the resistance of the control member 115, a first protrusion 1342a on the first switching member 1142 abuts on the intermediate connecting member 136a, The first protrusion 1344b on the second switching member 1143 abuts on the intermediate connecting member 136d, and further, the intermediate connecting member 136a and the intermediate connecting member 136d are respectively electrically connected to the intermediate connecting member136c and the intermediate connecting member 136b under the action of the resisting force of the switching member 114, so that the positive terminal 1121a of the first plug member 1121 and the positive terminal 1122a of the second plug member 1122 are electrically connected, and the negative terminal 1121b of the first plug member 1121 and the negative terminal 1122b of the second plug member 1122 are electrically connected.

As shown in FIG. 29, the positive output terminal 1123a of the output terminal 1123 is electrically connected to the positive terminal 1121a or the positive terminal 1122a through an electrical connection structure such as a wire; the negative output terminal 1123b is electrically connected to the negative terminal 1121b or the negative terminal 1121b through an electrical connection structure such as a wire, so that the first energy unit and the second energy unit are connected in parallel, and a low voltage (i.e., nV) output is realized through the output terminal 1123.

As shown in FIG. 29, when the switching member 114 is rotated to the second switching position under the resistance of the control member 115, the second protrusion 1342c of the first switching member 1142 and the second protrusion 1344d of the second switching member 1143 both abut on the intermediate connecting member 136e, and further electrically connected to the positive terminal 1122a of the second plug member 1122 and the negative terminal 1121b of the first plug member 1121 through the intermediate connecting member 136b and the intermediate connecting member 136c.

As shown in FIG. 29, the positive output terminal 1123a of the output terminal 1123 is electrically connected to the positive terminal 1121a through an electrical connection structure such as a wire; the negative output terminal 1123b is electrically connected to the negative terminal 1122b through an electrical connection structure such as a wire, so that the first energy unit and the second energy unit are connected in series, and a high-voltage (i.e., 2nV) output is realized through the output terminal 1123.

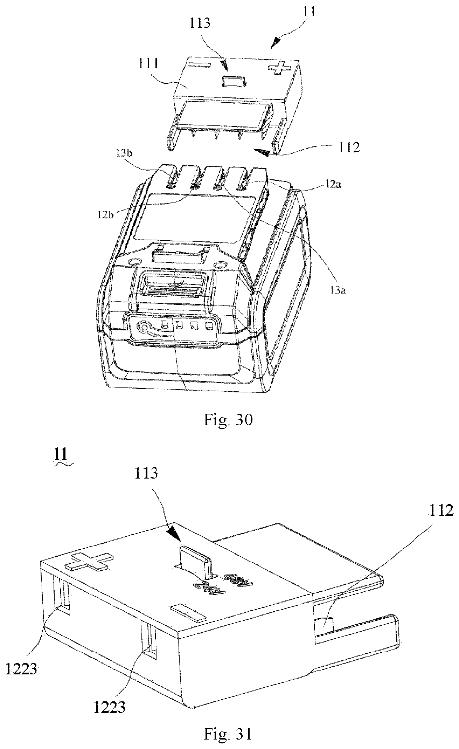

As shown in FIG. 2 and FIG. 30, an electric energy storage system is provided. The electric energy storage system also includes a first energy unit and a second energy unit. The main difference is that the power switching device 11 is a switching device that switches between the first position and the second position by swinging. The following description will focus on the difference; the same or similar content will not be repeated here.

As shown in FIGS. 31-32, the power switching device 11 also includes a housing 111, a plug 112 housed in the housing 111, and a power switching assembly 113 that is adjustable and connected to the plug 112. Similarly, the plug 112 includes a first plug member 1121 and a second plug member 1122 for electrically connecting the first energy unit and the second energy unit, and an output terminal 1123 for realizing electrical energy output. The first plug member 1121 and the second plug member 1122 have positive terminals (1121a, 1122a) and negative terminals (1121b, 1122b), and the output terminal 1123 can include a positive output terminal 1123a and a negative output terminal 1123b.

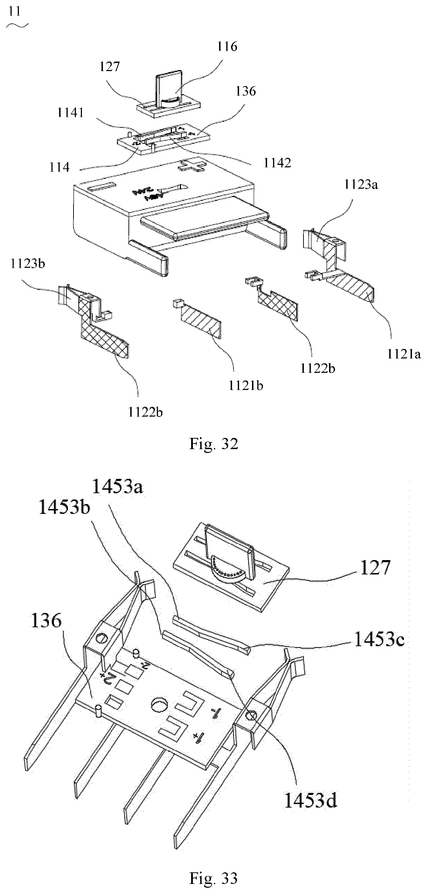

As shown in FIGS. 32 to 33, the power switching assembly 113 includes a control member 115 and a switching member 114. The control member 115 includes a switching button 116 disposed on the housing, and an intermediate connecting member 136 disposed corresponding to the trigger unit 127. In this embodiment, the switching button 116 and the trigger unit 127 are integrally formed, and the switching button 116 partially penetrates the housing 111 and is snapped in the receiving space through the trigger unit 127. The trigger unit 127 is provided with a limiting pillar 1481 protruding along the extension direction of the switching button 116, and the housing 111 is provided with a resisting pillar (not shown) corresponding to the limiting pillar 1481. When the switching button 116 is rotated, the switching button 116 can be limited to a fixed position under the action of the limiting pillar 1481 and the resisting pillar, so as to prevent the switching member 114 connected to the control member 115 from swinging freely between the first position and the second position.

As shown in FIG. 32, the intermediate connecting member 136 is provided with connecting holes (not labeled) in a staggered manner, and in this embodiment, the intermediate connecting member 136 is an insulating intermediate connecting member made of insulating material. Further, the positive terminals 1121a, 1122a, the negative terminals 1121b, 1122b of the first plug member 1121 and the second plug member 1122 all are provided with connecting portions (not labeled) corresponding to the connecting holes. The connecting portions of the positive terminals 1121a, 1122a, and the negative terminals 1121b, 1122b of the first plug member 1121 and the second plug member 1122 are exposed to the surface of the intermediate connecting member 136 facing the trigger unit 127 through the connecting holes. The positive terminal 1121a and the negative terminal 1121b of the first plug member 1121, the positive terminal 1122a and the negative terminal 1122b in the second plug member 1122 are respectively arranged on two sides of the intermediate connecting member 136.

As shown in FIGS. 32-33, the switching member 114 is provided at one end of the trigger unit 127 close to the intermediate connecting member 136, and can be rotated around the trigger unit 127 under the action of the switching button 116, so as to move between the first position and the second position. Further, the switching member 114 includes a first switching member 1142 and a second switching member 1143, the first switching member 1142 and the second switching member 1143 are separately and symmetrically arranged on both sides of the trigger unit 127. In this embodiment, each switching member 114 can include first ends 1453a, 1453b and the second ends 1453c, 1453d formed from the first ends 1453a, 1453b extending outward, and the distance between the two first ends 1453a, 1453b is smaller than the distance between the two second ends 1453c, 1453d, so that a substantially Y-shaped gap is formed between the switching member 1142 and the second switching member 1143.

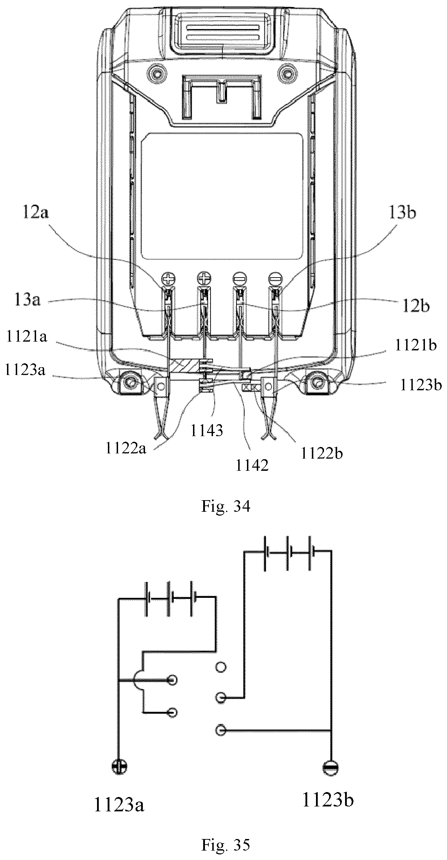

As shown in FIGS. 34-35, the switching member 114 can also include an initial position, a first switching position corresponding to the first position, and a second switching position corresponding to the second position. When the switching member 114 is in the initial position, the switching member 114 does not contact the connection portions of the positive terminals 1121a, 1122a and the negative terminals 1121b, 1122b of the first plug member 1121 and the second plug member 1122. The positive electrodes 12a, 13a and the negative electrodes 12b, 13b of the energy unit and the second energy unit connected to the plug 112 are in an open circuit state, and the electric energy storage system cannot output electrical energy.

As shown in FIGS. 34-36, when the switching member 114 is rotated to the first switching position under the action of the control member 115, the first end 1453a and the second end 1453c of the first switching member 1142 are respectively connected to the positive terminal 1121a of the first plug member 1121 and the positive terminal 1122a of the second plug member 1122 through the connecting portions, and the first end 1453b and the second end 1453d of the second switching member 1143 are respectively connected to the negative terminal 1121b of the first plug member 1122 and the negative terminal 1122b of the second plug member 1122 through the connecting portions.

As shown in FIGS. 35-36, the positive output terminal 1123a of the output terminal 1123 is electrically connected to the positive terminal 1121a or the positive terminal 1122a through an electrical connection structure such as a wire, and the negative output terminal 1123b is electrically connected to the negative terminal 1121b or the negative terminal 1122b through an electrical connection structure, such as a wire. Therefore, the first energy unit and the second energy unit are connected in parallel, and a low voltage (i.e., nV) output is achieved through the output terminal 1123.

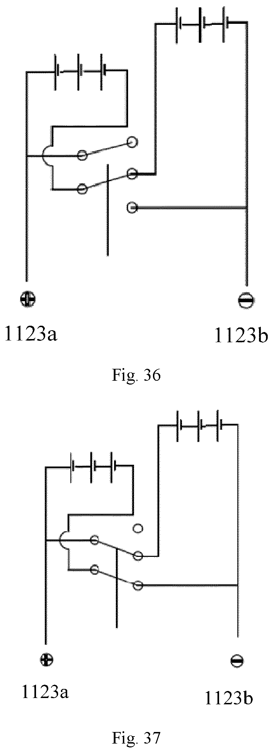

As shown in FIGS. 34 and 37, when the switching member 114 is rotated to the second switching position under the action of the control member 115, the first end 1453b and the second end 1453d of the second switching member 1143 are respectively connected to the negative terminal 1121b of the first plug member 1121 and the positive terminal 1122a of the second plug member 1122 through the connecting portion. At least one of the first end 1453a and the second end 1453c of the first switching member 1142 rotates along the plane where the intermediate connecting member 136 is located on, and does not contact the connecting portion of the intermediate connecting member 136.

As shown in FIG. 37, the positive output terminal 1123a of the output terminal 1123 is electrically connected to the positive terminal 1121a through an electrical connection structure such as a wire; the negative output terminal 1123b is electrically connected to the negative terminal 1122b through an electrical connection structure such as a wire, so that the first energy unit and the second energy unit are connected in series, and a high-voltage (i.e., 2nV) output is realized through the output terminal 1123.

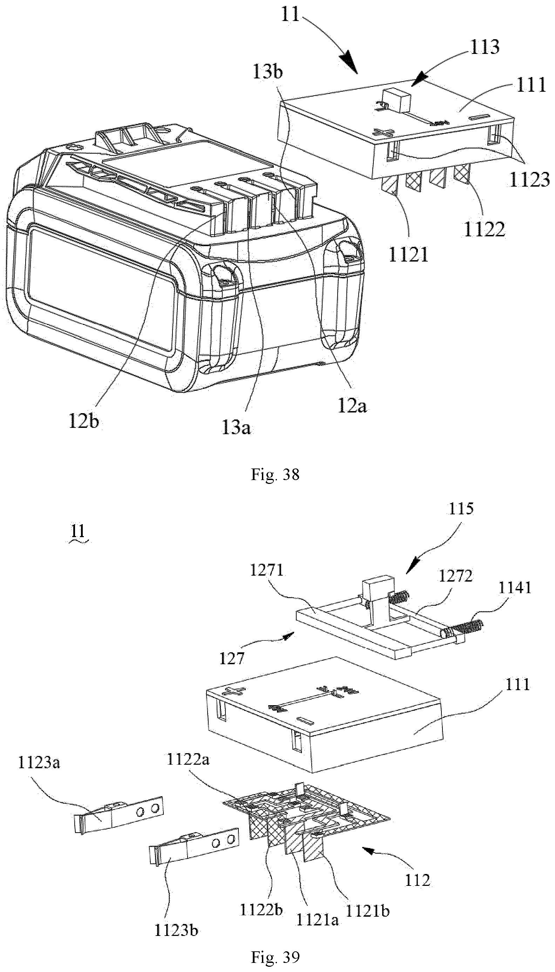

As shown in FIG. 2 and FIG. 38, an electric energy storage system is provided. The electric energy storage system also includes a first energy unit and a second energy unit. The main difference is that the power switching device 11 is a switching device that switches between the first position and the second position by sliding. The following description will explain the differences in detail; the same or similar content will not be repeated here.

As shown in FIGS. 39-40, the power switching device 11 can include a housing 111, a plug 152 accommodated in the housing 111, and a power switching assembly 113 that is adjustable and connected to the plug 152. The plug 152 includes a first plug member 1121, a second plug member 1122, and an output terminal 1123 for realizing electric energy output, and the first plug member 1121 and the second plug member 1122 have positive terminals (1121a, 1122a) and negative terminals (1121b, 1122b). The output terminal 1123 can include a positive output terminal 1123a and a negative output terminal 1123b.

As shown in FIGS. 39-40, the power switching assembly 113 includes a switching member 114 and a control member 115. The switching member 114 is used to electrically connect/disconnect the first plug member 1121 and the second plug member 1122 and can switch a coupling form of the first plug member 1121 and the second plug member 1122. Specifically, the switching member 114 is housed in the housing 111, and the switching member 114 can be driven to slide in the housing 111 and move between the first position and the second positions under the push/pull action of the control member, so as to further adjust the coupling form of the first plug member 1121 and the second plug member 1122.

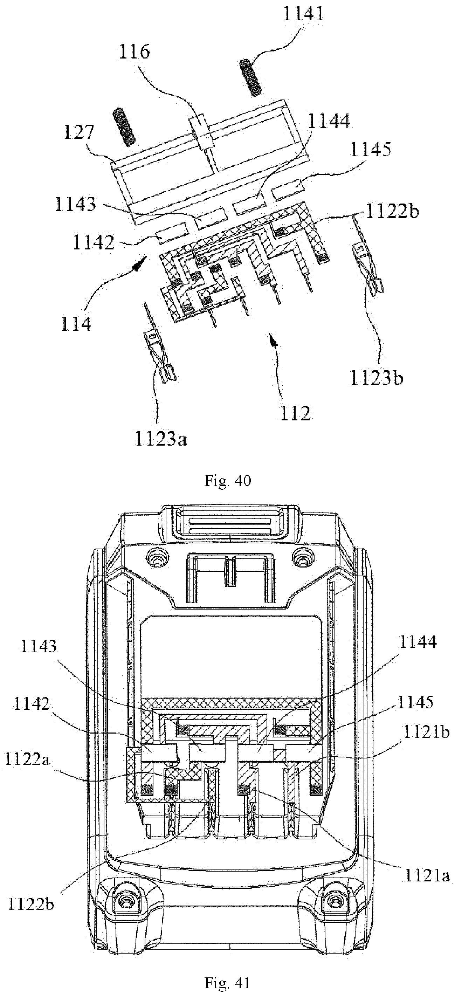

As shown in FIG. 40, the switching member 114 may be a conductive switching member that can be electrically connected, and the control member 115 includes a switching button 116 penetrating the housing 111 and a trigger unit 127 disposed on the switching button 116. In this embodiment, the trigger unit 127 is formed by extending outward from the end of the switching button 116 housed in the accommodating space along the direction perpendicular to the direction in which the power switching device 11 and the energy unit are plugged (i.e., the plugging direction), and the triggers portion 127 is symmetrically arranged with respect to the central axis of the switching button 116.

As shown in FIGS. 39-40, the control member 115 has an initial position and a switching position corresponding to the first position and the second position. The switching position when the control member 115 controls the switching member 114 in the first position is defined as the first switching position, the switching position when the control member 115 controls the switching member 114 in the second position is defined as the second switching position.

As shown in FIG. 39, the trigger unit 127 may be roughly arranged in a " 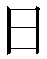 " shape, and includes a first trigger unit 1271 and a second trigger unit 1272. The first trigger unit 1271 and the second trigger part 1272 extend perpendicular to the plugging direction and are parallel to each other. The switching member 114 is disposed on the first trigger unit 1271 to switch between the first position and the second position while driven by the switching button 116 and the trigger unit 127. One side of the second trigger unit 1272 away from the first trigger unit 1271 is provided with an elastic member 1141. Thereby when the switching button 116 is pushed to control the switching member 114 to switch between the first position and the second position, it is convenient for the control member 115 to return to the initial position from the first switch position or the second switch position. The number of elastic member 1141 may be two, and the two elastic members 1141 are arranged symmetrically about the central axis of the switching button 116.

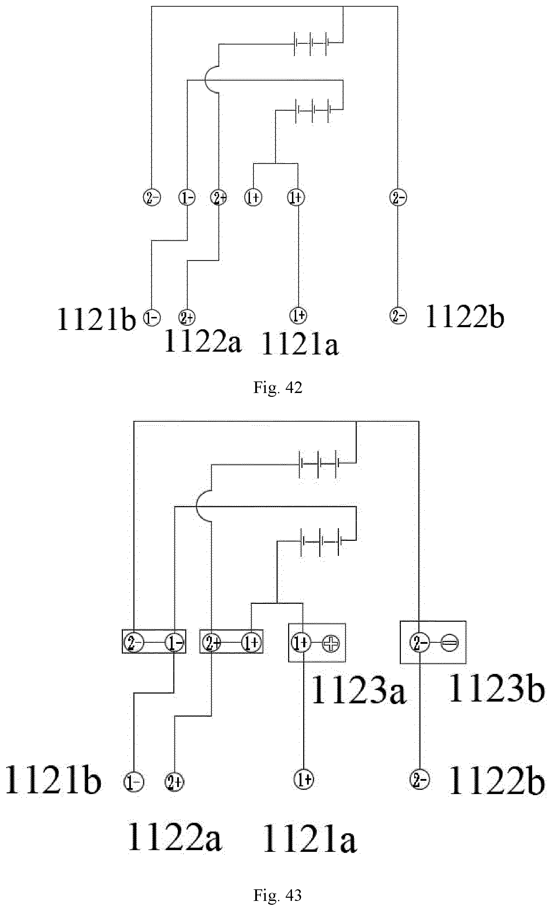

As shown in FIG. 39, in one embodiment, the switching member 114 is provided with at least two conductive sheets arranged in a horizontal plate shape. There are four switching members 114 and the four switching members 114 are arranged side by side along the extension direction of the first trigger unit 1271; and in this embodiment each plug 152 can include at least two contacts arranged in parallel in the front and back along the plugging direction. The first plug member 1121 includes two negative terminals 1121b and three positive terminals 1121a. The two negative terminals 1121b and three positive terminals 1121a are arranged in a staggered manner in the left and right along the plugging direction, and any two of the three positive terminals 1121a are arranged side by side or in parallel. The second plug member 1122 includes two positive terminals 1122a and two negative terminals 1122b. The two positive terminals 1122a are arranged in a staggered manner in the left and right along the plugging direction, the two negative terminals 1122b are arranged forward and backward in the plugging direction (as shown in FIG. 42). In this way, when the switching member 155 is switched between the first position and the second position under the action of the control member 115, the switching member 114 can electrically connect to the contacts on different plugs 152 to further control the coupling form among the plugs 152.

As shown in FIGS. 40-41, when the control member 115 is in the first switching position, the switching member 114 is in the first position. At this time, the first switching member 1142 is electrically connected to the negative terminals 1121b, 1122b of the first plug member 1121 and the second plug member 1122; the second switching member 1143 is electrically connected to the positive terminals 1121a, 1122a of the first plug member 1121 and the second plug member 1122; the third switching member 1144 is electrically connected to the positive terminal 1121a of the first plug member 1121 and the positive output terminal 1123a of the output terminal 1123; the fourth switching member 1145 is electrically connected to the negative terminal 1122b of the second plug member 1122 and the negative output terminal 1123b of the output terminal 1123. At this time, the first energy unit and the second energy unit are connected in parallel through the switching member 114, and further a lower- voltage (i.e., nV) output is realized through the output terminal 1123.

As shown in FIGS. 39-44, when the control member 115 is in the second switching position, the switching member 114 is in the second position. At this time, the first switching member 1142 is electrically connected to the negative terminal 1121b of the first plug member 1121 and the positive terminal 1122a of the second plug member 1122. The second switching member 1143 is in a blank position and is not electrically connected to any positive and negative terminals. The third switching member 1144 is electrically connected to the positive terminal 1121a of the first plug member 1121 and the positive output terminal 1123a of the output terminal 1123. The fourth switching member 1145 is electrically connected to the negative terminal 1122b of the second plug member 1122 and the negative output terminal 1123b of the output terminal 1123. At this time, the first energy unit and the second energy unit are connected in series through the switching member 114, and further a high-voltage (i.e., 2nV) output is realized through the output terminal 1123.

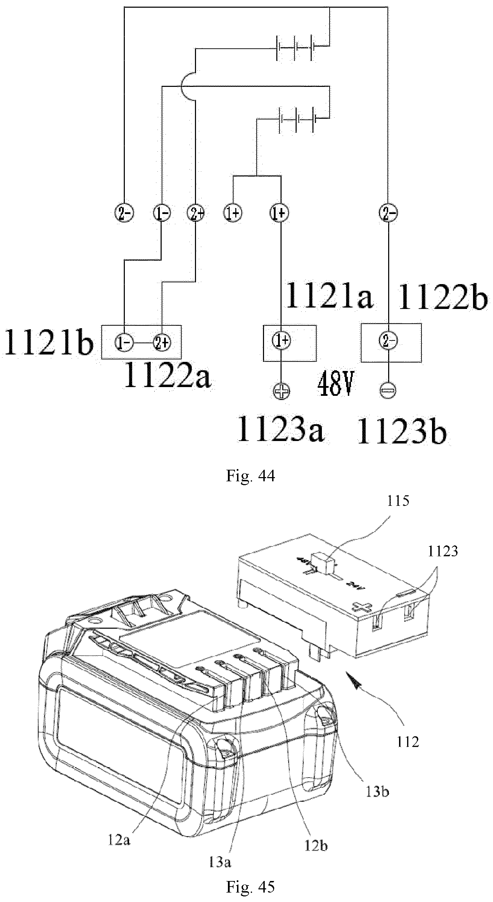

As shown in FIGS. 2 and 45, an electric energy storage system is provided. The electric energy storage system also includes a first energy unit and a second energy unit. The main difference is that the power switching device 11 is a switching device that switches between the first position and the second position by sliding.

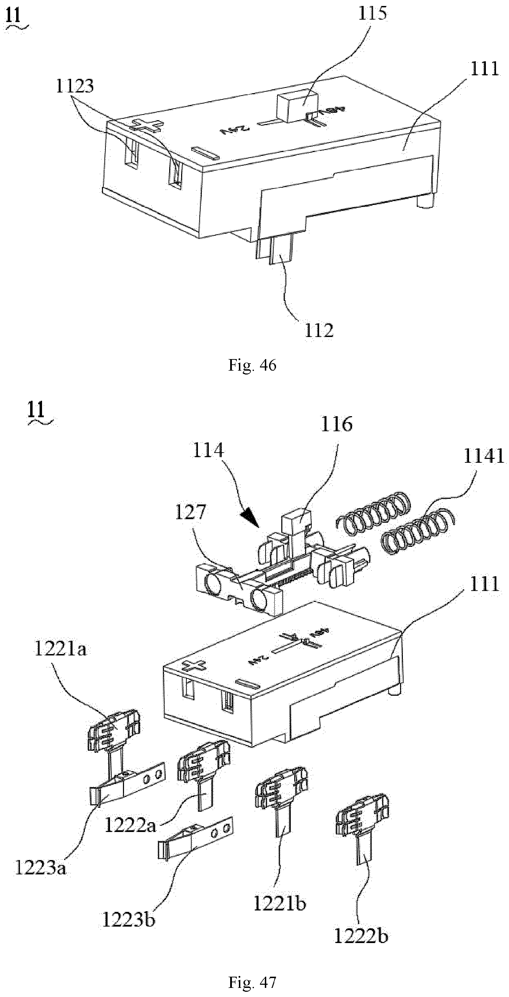

As shown in FIGS. 46-47, the power switching device 11 includes a housing 111, a plug 112 housed in the housing 111, and a power switching assembly 113 that is adjustable and connected to the plug 112. The plug 112 includes a first plug member 1121, a second plug member 1122, and an output terminal 1123 for realizing electrical energy output. The first plug member 1121 and the second plug member 1122 may have positive terminals (1121a, 1122a) and negative terminals (1121b, 1122b), The output terminal 1123 can include a positive output terminal 1123a and a negative output terminal 1123b.

As shown in FIGS. 46-47, the switching member 114 may be a conductive switching member. The control member 115 can include a switching button 116 penetrating through the housing 111 and a trigger unit 127 corresponding to the switching button 116. Furthermore, the trigger unit 127 extends along the plugging direction, and is provided with a first trigger unit 1271 and a second trigger unit 1272 that are parallel to each other for fixedly connecting the switching member 114. The first trigger unit 1271 and the second trigger unit 1272 is connected through a connecting arm (not labeled), so that the trigger unit 127 is arranged in an "I" shape. The housing 111 is provided with a sliding groove for accommodating the connecting arm, so that the control member 115 can drive the switching member 114 to slide between the first position and the second position.

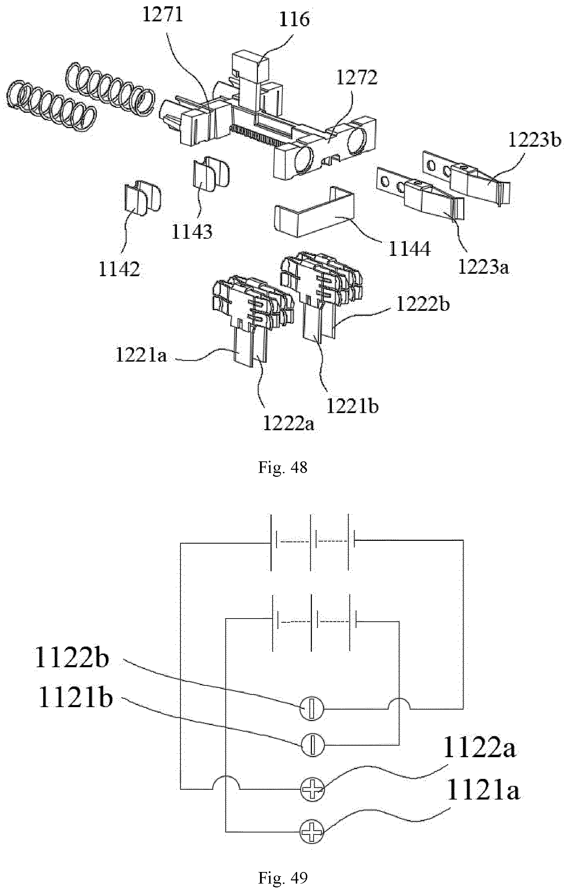

As shown in FIG. 48, the first trigger unit 1271 is further provided with elastic members 1141. The elastic members 1141 are provided on one side of the first trigger unit 1271 away from the second trigger unit 1272. This arrangement can facilitate the resetting of the trigger unit 127 and the pushing and pulling of the control member 115 to further improve the practicability of the electric energy storage system.

As shown in FIG. 48, the switching member 114 includes a first switching member 1142, a second switching member 1143 and a third switching member 1144. The first switching member 1142 and the second switching member 1143 are disposed on the first trigger unit 1271, and the third switching member 1144 is disposed on the second trigger unit 1272. The first switching member 1142, the second switching member 1143 are arranged oppositely to the third switching member 1144, and the first switching member 1142, the second switching member 1143 and the third switching member 1144 are arranged in a "U" shape.

As shown in FIGS. 49-50, the control member 115 can have at least a first switching position corresponding to the first position and a second switching position corresponding to the second position. When the control member 115 is in the first switching position, the switching member 114 is in the first position. At this time, the first switching member 1142 is electrically connected to the positive terminals 1121a, 1122a of the first plug member 1121 and the second plug member 1122; the second switching member 1143 is electrically connected to the negative terminals 1121b and 1122b of the first plug member 1121 and the second plug member 1122; the third switching member 1144 is in a free state.

As shown in FIG. 49-50, the positive output terminal 1123a of the output terminal 1123 is electrically connected to the positive terminal 1121a or the positive terminal 1122a through an electrical connection structure such as a wire; the negative output terminal 1123b is electrically connected to the negative terminal 1121b or the negative terminal 1122b through an electrical connection structure such as a wire; so that the first energy unit and the second energy unit are connected in parallel, and a low voltage (i.e., nV) output is achieved through the output terminal 1123.

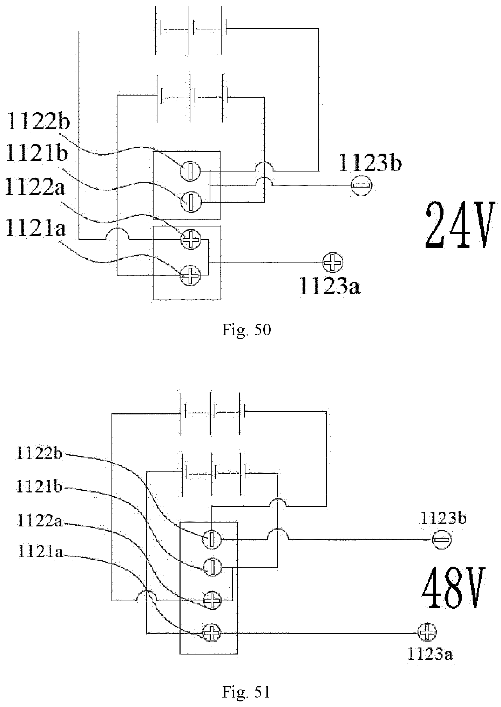

As shown in FIGS. 49 and 51, when the control member 115 is in the second switching position, the switching member 114 is in the second position. At this time, the first switching member 1142 and the second switching member 1143 are in a free state; The two ends of the third switching member 1144 are respectively connected to the negative terminal 1121b of the first plug member 1121 and the positive terminal 1122a of the second plug member 1122.

As shown in FIG. 51, the positive output terminal 1123a of the output terminal 1123 is electrically connected to the positive terminal 1121a through an electrical connection structure such as a wire; the negative output terminal 1123b is electrically connected to the negative terminal 1122b through an electrical connection structure such as a wire; so that the first energy unit and the second energy unit are connected in series, and a high-voltage (i.e., 2nV) output is realized through the output terminal 1123.

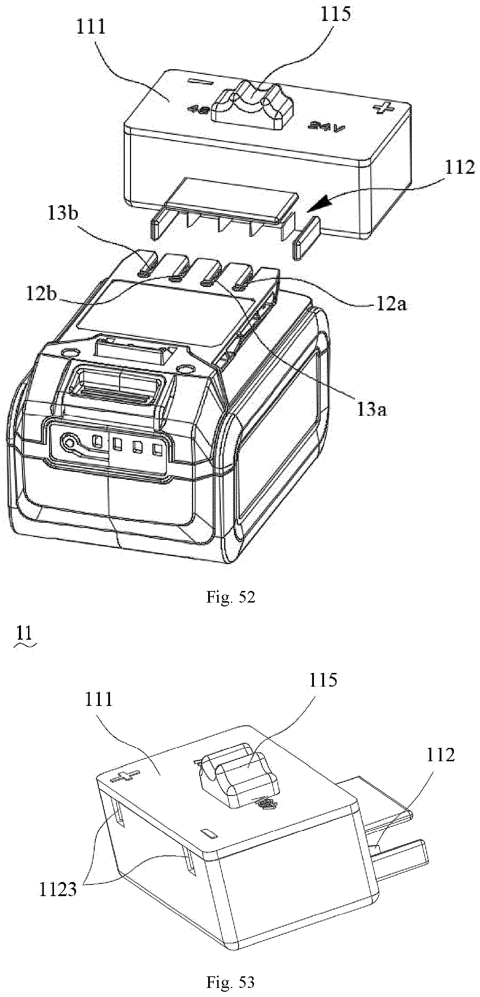

As shown in FIGS. 2 and 52, an electric energy storage system is provided. The electric energy storage system also includes a first energy unit and a second energy unit. The main difference is that the power switching device 11 is a switching device that switches between the first position and the second position by toggling.

As shown in FIGS. 53-54, the power switching device 11 can include a housing 111, a plug 112 housed in the housing 111, and a power switching assembly 113 that is adjustable and connected to the plug 112. The plug 112 includes a first plug member 1121 and a second plug member 1122 and an output terminal 1123 for realizing electric energy output, and the first plug member 1121 and the second plug member 1122 may have positive terminals (1121a, 1122a) and negative terminals (1121b, 1122b). The output terminal 1123 can include a positive output terminal 1123a and a negative output terminal 1123b.

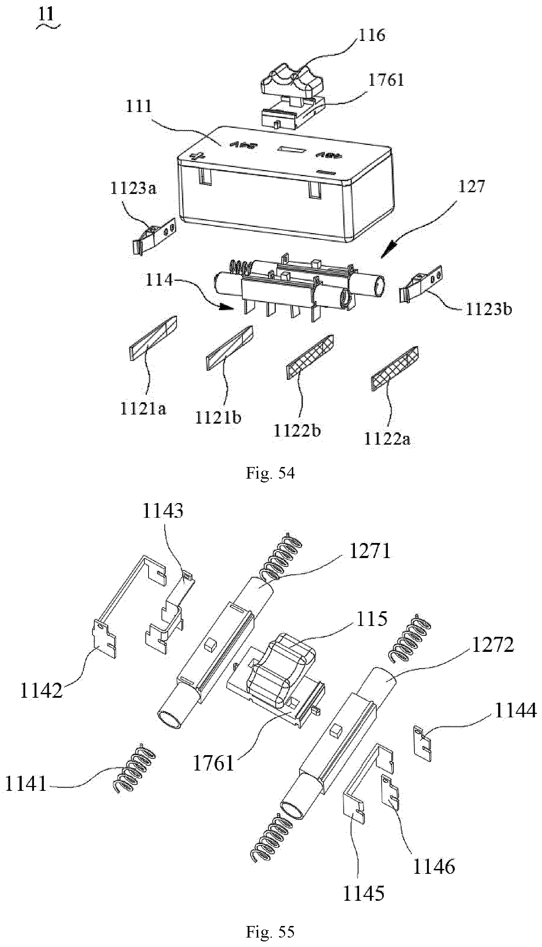

As shown in FIGS. 54-55, the control member 115 includes a switching button 116 penetrating through the housing 111 and a trigger unit 127 corresponding to the switching button 116. The switching member 114 is connected to the trigger unit 127 and is a conductive switching member which can be electrically connected.

As shown in FIG. 55, the trigger unit 127 can be driven by the switching button 116 to slide left and right in a direction perpendicular to the plugging direction, and further the switching member 114 connected to the trigger unit 127 is driven by the switching button 116 to switch between the first position and the second position. In this embodiment, the switching button 116 includes a sliding block 1761 for connecting the trigger unit 127. The sliding block 1761 and the switching button 116 are provided separately to facilitate the assembly of the power switch device 11. Of course, in other embodiments, the sliding block 1761 can also be integrally formed with the switching button 116.

As shown in FIG. 55, the trigger unit 127 includes a first trigger unit 1271 and a second trigger unit 1272 arranged in parallel, and each trigger unit 127 can include a convex block (not labeled) for connecting the sliding block 1761, and the sliding block 1761 are provided with accommodating grooves (not labeled) corresponding to the convex blocks, and the accommodating grooves are arranged in left and right and in a staggered manner along the plugging direction, so that the first trigger unit 1271 and the second trigger unit 1272 are arranged in a staggered manner along the sliding direction of the switching button 116; Furthermore, two ends of each trigger unit 127 are connected with elastic members 1141, which can facilitate the control of the member 115 to toggle.

As shown in FIG. 55, the switching member 114 includes a first switching member 1142, a second switching member 1143, a third switching member 1144, a fourth switching member and a fifth switching member 1146. The first switching member 1142 and a second switching member 1143 are connected to the first trigger unit 1271, and the third switching member 1144, the fourth switching member 1145 and the fifth switching member 1146 are connected to the second trigger unit 1272. The first switching member 1142, the second switching member 1143, and the fourth switching member 1145 each are provided with "U"-shaped or substantially "U"-shaped connecting portions (not labeled) for connecting the positive terminals and the negative terminals 1121a, 1122a, 1121b, 1122b, the third switching member 1144 and the fifth switching member 1146 are both arranged in a sheet shape.

As shown in FIGS. 55-57, the control member 115 also has at least a first switching position corresponding to the first position and a second switching position corresponding to the second position. When the control member 115 is in the first switching position, the switching member 114 is in the first position. At this time, the first switching member 1142 is electrically connected to the positive terminals 1121a, 1122a of the first plug member 1121 and the second plug member 1122; the second switching member 1143 is electrically connected to the negative terminals 1121b and 1122b in the first plug member 1121 and the second plug member 1122; the third switching member 1144, the fourth switching member 1145, and the fifth switching member 1146 are in a free state; so that the first energy unit and The second energy unit is connected in parallel, and further a low voltage (i.e. nV) output is realized through the positive output terminal 1123a and the negative output terminal 1123b of the output terminal 1123.

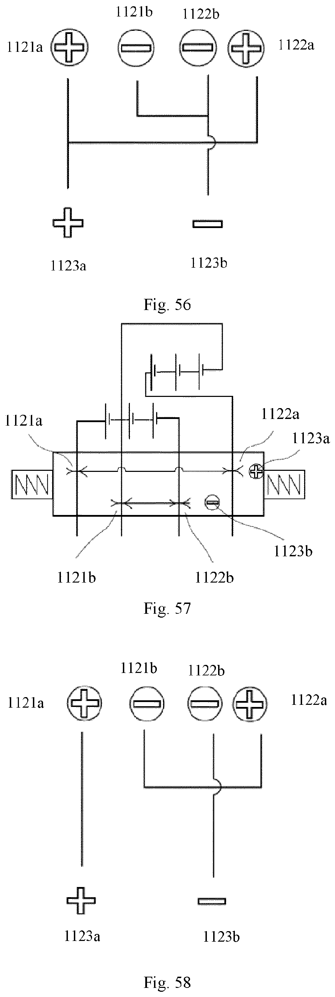

As shown in FIGS. 58-59, when the control member 115 is in the second switching position, the switching member 114 is in the second position. At this time, the first switching member 1142 and the second switching member 1143 are in a free state; two ends of the fourth switching member 1145 are respectively connected to the negative terminal 1121b of the first plug member 1121 and the positive terminal 1122a of the second plug member 1122. The third switching member 1144 is electrically connected to the positive terminal 1121a through an electrical connection structure such as a wire; the fifth switching member 1146 is connected to the negative output terminal 1123b through an electrical connection structure such as a wire; so that the first energy unit and the second energy unit are connected in series, and a high-voltage (i.e., 2nV) output is realized through the output terminal 1123.

As shown in FIG. 2-60, an electric energy storage system is provided. The electric energy storage system can include roughly the same structure as the above-mentioned electric energy storage system. The main difference is that the structure of the power switching device 11 for realizing the switching between the first position and the second position by pushing and pulling is different.

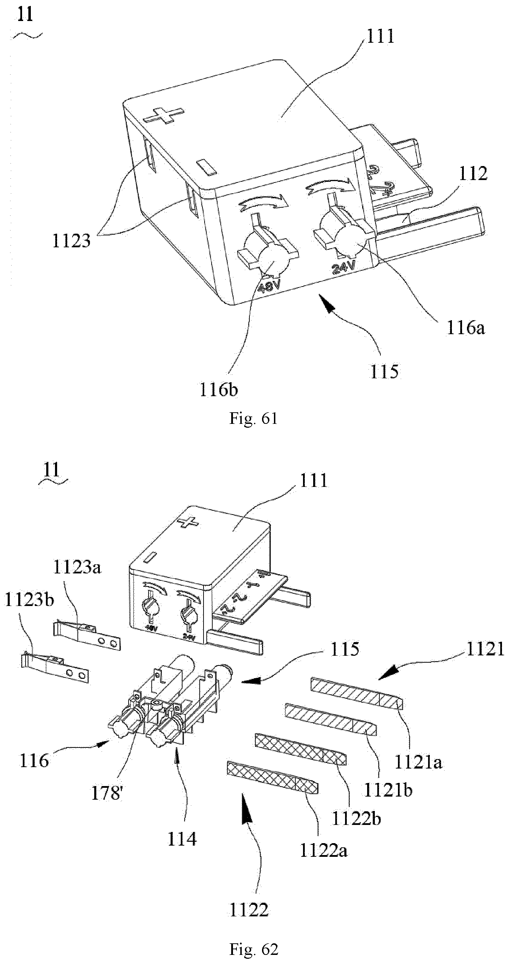

As shown in FIGS. 61-62, the power switching device 11 can include a housing 111, a plug 112 housed in the housing 111, and a power switching assembly 113 that is adjustable and connected to the plug 112. The plug 112 includes a first plug member 1121 and a second plug member 1122, and an output terminal 1123 for realizing electric energy output, and both the first plug member 1121 and the second plug member 1122 have positive terminals (1121a, 1122a) and negative terminals (1121b, 1122b). The output terminal 1123 can include a positive output terminal 1123a and a negative output terminal 1123b.

As shown in FIGS. 62-63, switching buttons 116 of the control member 115 further includes first switching buttons 116a and second switching buttons 116b for respectively controlling the movement of the first trigger unit 1271 and the second trigger unit 1272,.

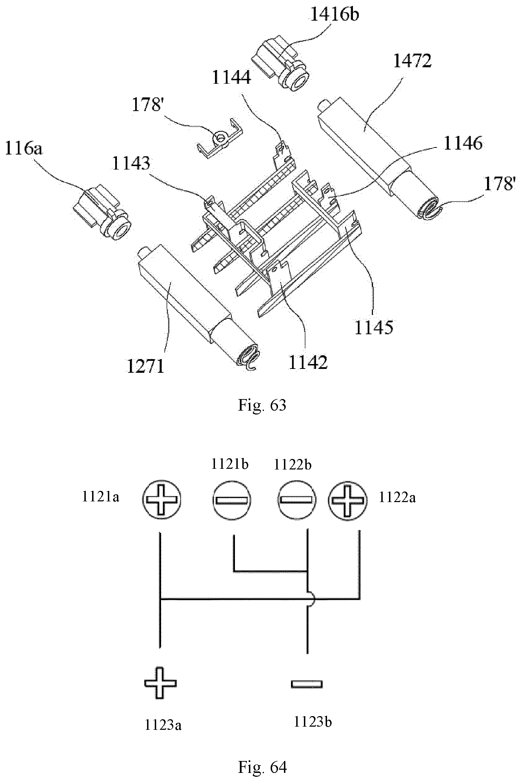

As shown in FIG. 63, the first switching button 116a and the second switching button 116b are respectively disposed at one end of the first trigger unit 1271 and the second trigger unit 1272 along vertical plugging direction and located at the same side of the housing 111. Further, a resisting member 178' is further disposed between the first trigger unit 1271 and the second trigger unit 1272. The setting of the resisting member 178' can ensure that only one trigger unit 127 is driven by the switching button 116 at the same time. This arrangement can effectively avoid the short circuit of the electric tool and the power supply device connected to the two ends of the power switching device 11 due to misoperation.

As shown in FIG. 62, the control member 115 can include an initial position, a first switching position corresponding to the first position, and a second switching position corresponding to the second position. When the control member 115 is in the initial position, the switching member 114 is separated from the positive and negative terminals 1121a, 1122a, 1121b, 1122b, the first energy unit and the second energy unit are both in a disconnected state, and the output terminal 1123 does not output electric energy to the outside.

As shown in FIGS. 64-65, when the control member 115 is in the first switching position, and the switching member 114 is in the first position. At this time, the first energy unit and the second energy unit are connected in parallel through the cooperation of first switching member 1142, the second switching 1143 and the positive and negative terminals 1121a, 1122a, 1121b, 1122b, and further a low voltage (i.e. nV) output is realized through the positive output terminal 1123a and the negative output terminal 1123b of the output terminal 1123.

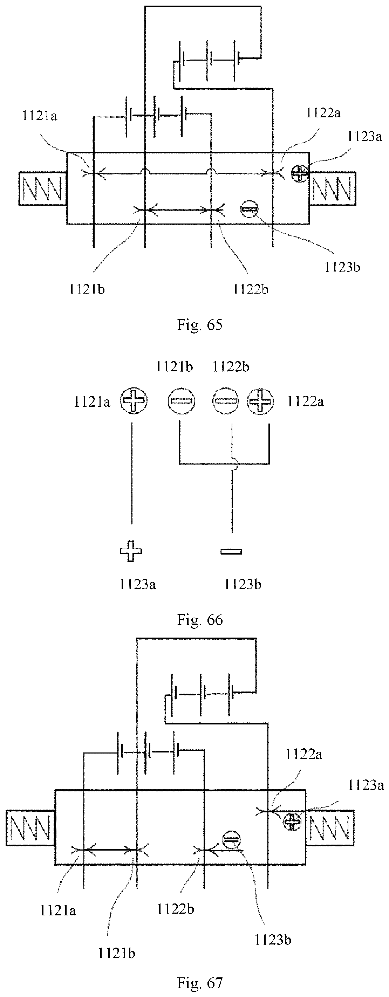

As shown in FIGS. 66-67, when the control member 115 is in the second switching position, the switching member 114 is in the second position. At this time, the first energy unit and the second energy unit are connected in series through the fourth switching member 1145 and the cooperation of the positive and negative terminals 1121b and 1122a, and further a high-voltage(i.e. 2nV) output is realized through the cooperation of the third switching member 1144, the fifth switching member 1146, the positive terminal 1121a, the negative terminal 1122b and the positive and negative outputs 1123a, 1123b of the output terminal 1123.

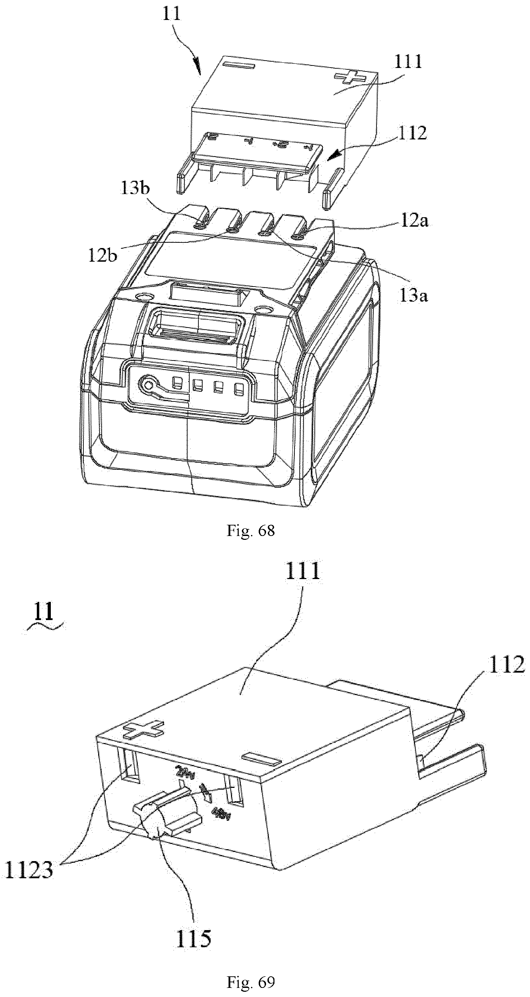

As shown in FIGS. 2 and 68, an electric energy storage system is provided. The electric energy storage system also includes a first energy unit and a second energy unit. The main difference is that the power switching device 11 is a switching device that switches between the first position and the second position by pulling and pushing.

As shown in FIGS. 69-70, the power switching device 11 includes a housing 111, a plug 112 housed in the housing 111, and a power switching assembly 113 that is adjustable and connected to the plug 112. The plug 112 includes a first plug member 1121 and a second plug member 1122, and an output terminal 1123 for realizing electric energy output, and both the first plug member 1121 and the second plug member 1122 have positive terminals (1121a, 1122a) and negative terminals (1121b, 1122b). The output terminal 1123 can include a positive output terminal 1123a and a negative output terminal 1123b.

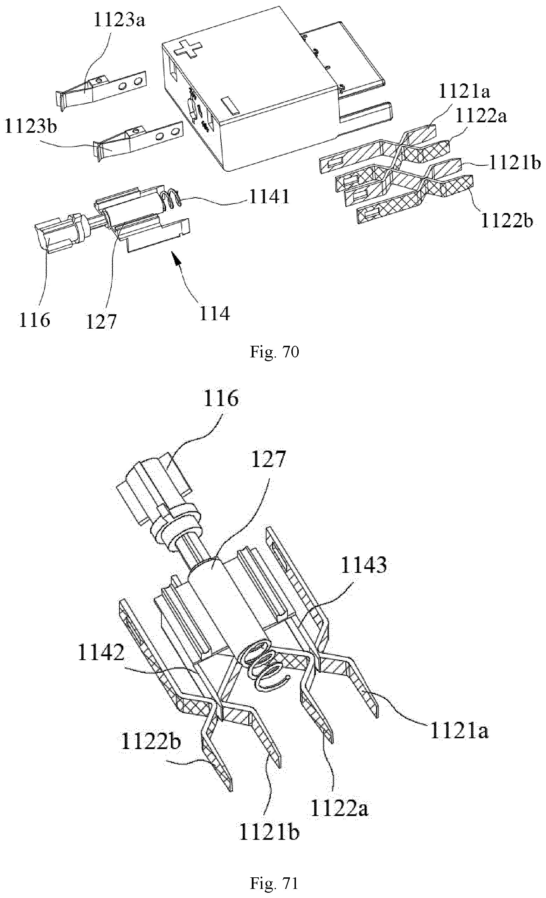

As shown in FIG. 70, the power switching device 11 includes a switching member 114 for separating two adjacent plugs 112, and the switching member 114 is, for example, an insulating switching member made of an insulating material.

As shown in FIGS. 69-70, the control member 115 includes a switching button 116 penetrating through the housing 111 and a trigger unit 127 corresponding to the switching button 116. The trigger unit 127 is slidably received in the housing 111 and can slide along the plugging direction under the drive of the switching button 116. An elastic member 1141 is provided at one end of the trigger unit 127 opposite to the switching button 116, so that the trigger unit 127 can conveniently and quickly drive the switching member 114 switch between in the first position and the second position under the combined action of the switching button 116 and the elastic member 1141.

As shown in FIG. 71, the switching member 114 can include a first switching member 1142 and a second switching member 1143 that are arranged in parallel on both sides of the movement direction (i.e., the plugging direction) of the trigger unit 127. The positive and negative terminals are arranged adjacently in the plug 112, that is, the positive terminal 1121a and the positive terminal 1122a, the positive terminal 1122a and the negative terminal 1121b, the negative terminal 1121b and the negative terminal 1122b are all provided with connecting protrusions for electrical connection with each other. The connecting protrusions between the positive terminal 1121a and the positive terminal 1122a, the negative terminal 1121b and the negative terminal 1122b are located on the same straight line, and the connecting protrusions between the positive terminal 1122a and the negative terminal 1121b are arranged in a staggered manner.

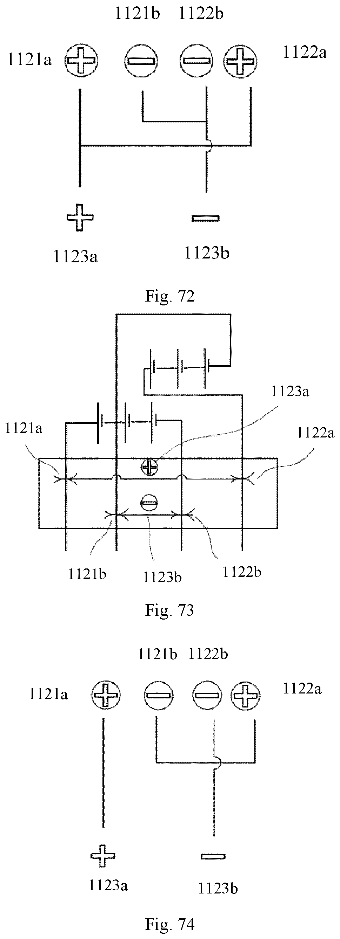

As shown in FIGS. 72-73, the control member 115 in this embodiment can have a first switching position corresponding to the first position and a second switching position corresponding to the second position. When the control member 115 is in the first position, the switching member 114 is separated from the first plug member 1121 and the second plug member 1122. At this time, the positive terminal 1121a and the positive terminal 1122a, the negative terminal 1121b and the negative terminal 1122b are connected to each other through the connecting protrusions. The connection protrusions between the positive terminal 1122a and the negative terminal 1121b are separated from each other, so that the first energy unit and the second energy unit are connected in parallel, and further a low voltage (i.e. nV) output is realized through the positive output terminal 1123a and the negative output terminal 1123b of the output terminal 1123.

As shown in FIGS. 74-75, when the control member 115 is in the second switching position, the switching member 114 is in the second position. At this time, the first switching member 1142 and the second switching member 1143 are respectively driven by the switching button 116 and the trigger unit 127 to move to the position between the positive terminal 1121a and the positive terminal 1122a, the negative terminal 1121b and the negative terminal 1122b, in order to separate the positive terminal 1121a and the positive terminal 1122a, the negative terminal 1121b and the negative terminal 1122b. At this time, the connecting protrusions between the positive terminal 1122a and the negative terminal the terminals 1121b are electrically connected to each other under the action of deformation, so that the first energy unit and the second energy unit are connected in series, and a high-voltage (i.e. 2nV) output is further realized through the positive output terminal 1123a and the negative output terminal 1123b of the output terminal 1123.

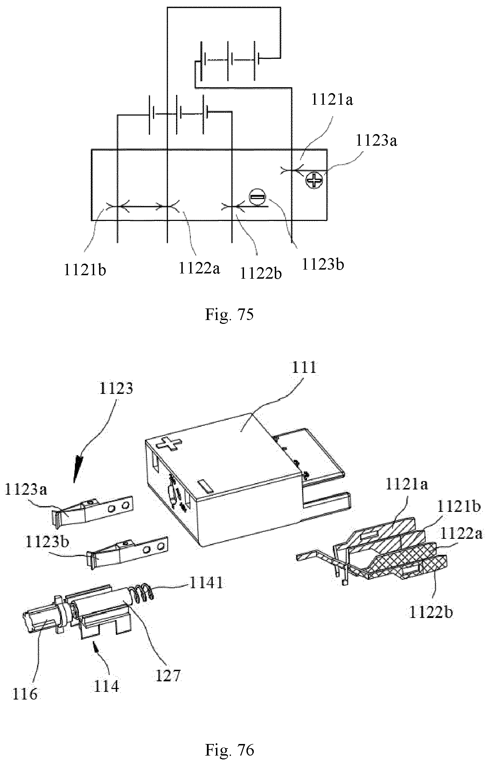

As shown in FIGS. 76-77, an electric energy storage system is further provided. The electric energy storage system also includes a first energy unit and a second energy unit. The main difference is that the power switching device 11 is a switching device that switches between the first position and the second position by pushing and pulling.

As shown in FIGS. 76-77, the power switching device 11 includes a housing 111, a plug 112 housed in the housing 111, and an power switching assembly (not labeled) that is adjustable and connected to the plug 112. The plug 112 includes a first plug member 1121 and a second plug member 1122, and an output terminal 1123 for realizing electric energy output, and both the first plug member 1121 and the second plug member 1122 have positive terminals (1121a, 1122a) and negative terminals (1121b, 1122b), the output terminal 1123 can include a positive output terminal 1123a and a negative output terminal 1123b.

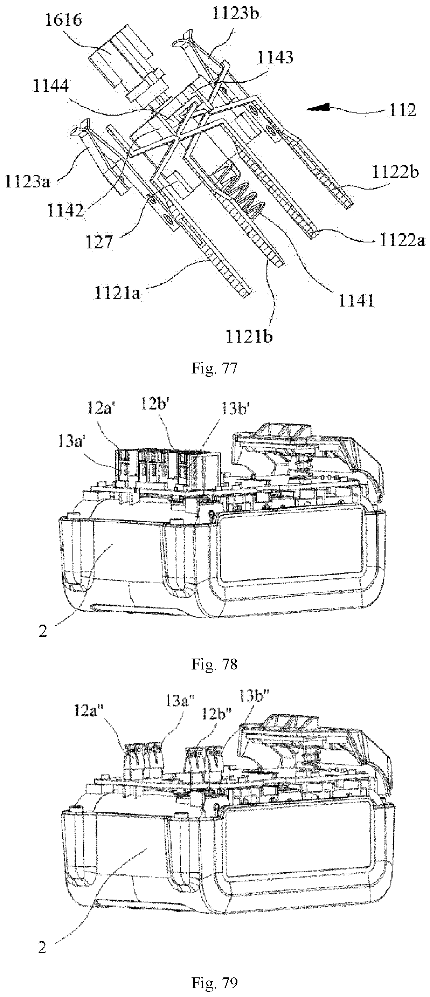

As shown in FIG. 77, the first plug member 1121 and the second plug member 1122 of this embodiment are arranged in a form of a positive terminal 1121a, a negative terminal 1121b, a positive terminal 1122a, and a negative terminal 1122b, and connecting protrusions for electrically connecting to each other are disposed between the positive terminal 1121a and the positive terminal 1122a, the negative terminal 1121b and the negative terminal 1122b.

As shown in FIG. 77, the switching member 114 includes a first switching member 1142, a second switching member 1143, and a third switching member 1144. The first switching member 1142 and the second switching member 1143 are arranged in parallel on both sides of the movement direction (that is, the plugging direction) of the trigger unit 127. The third switching member 1144 is disposed between the first switching member 1142 and the second switching member 1143. And in this embodiment, the first switching member 1142 and the second switching member 1143 are made of an insulating material, and the third switching member 1144 is made of a conductive material.

As shown in FIG. 77, the control member includes a switching button 116 penetrating through the housing 111 and a trigger unit 127 corresponding to the switching button 116. The trigger unit 127 is slidably accommodated in the housing 111 and can be driven by the switching button 116 to slide in the plugging direction. An elastic member 1141 is provided at one end of the trigger unit 127 opposite to the switching button 116, so that the trigger unit 127 can conveniently and quickly drive the switching member 114 to switch between the first position and the second position under the combined action of the switching button 116 and the elastic member 1141.

As shown in FIGS. 76-77, the control member in this embodiment can include a first switching position corresponding to the first position and a second switching position corresponding to the second position. When the control member is in the first position, the switching member 114 is separated from the first plug member 1121 and the second plug member 1122. At this time, the positive terminal 1121a and the positive terminal 1122a, the negative terminal 1121b and the negative terminal 1122b are electrically connected to each other through connecting protrusions, so that the first energy unit and the second energy unit are connected in parallel, and a low voltage (i.e., nV) output is further realized through the positive output terminal 1123a and the negative output terminal 1123b of the output terminal 1123.

As shown in FIGS. 76-77, when the control member is in the second switching position, the switching member 114 is in the second position. At this time, the first switching member 1142 is plugged between the positive terminal 1121a and the positive terminal 1122a. The switching member 1143 is plugged between the negative terminal 1121b and the negative terminal 1122b to separate the positive terminal 1121a and the positive terminal 1122a, and the negative terminal 1121b and the negative terminal 1122b. Further, the third switching member 1144 abuts on the negative terminal 1121b and the positive terminal 1122a, and are electrically connected to the negative terminal 1121b and the positive terminal 1122a, so that the first energy unit and the second energy unit are connected in series, and a high-voltage (i.e. 2nV) output is realized through the positive output terminal 1123a and the negative output terminal 1123b of the output terminal 1123.

As shown in FIG. 78, an electric energy storage system is provided. The electric energy storage system can include the same structure as the above-mentioned electric energy storage system. The only difference is that the positive electrodes 12a', 13a' and the negative electrodes 12b', 13b' of the first energy unit and the second energy unit are arranged up and down.

As shown in FIG. 79, an electric energy storage system is provided. The difference between this electric energy storage system and the above-mentioned electric energy storage system is only: the positive electrodes 12a", 13a" and the negative electrodes 12b", 13b" of the first energy unit and the second energy unit are arranged front and back along the direction of the power switching device 11 and the energy unit, and the negative electrodes 12b", 13b" are parallel to the positive electrode 12a", 13a".

As shown in FIGS. 78-79, the arrangement of the plugs 112 in the power switching device 11 can be adjusted according to the arrangement of the positive and negative electrodes of the first energy unit and the second energy unit. When the power switching device 11 is in the first position, the first energy unit and the second energy unit are connected in parallel, and when the power switching device 11 is in the second position, the first energy unit and the second energy unit can be connected in series, that is, the arrangement form of the plugs 112 of the power switching device 11 in can be adjusted according to the actual situation, which is not limited here.

An electric tool (not shown) is also provided. The electric tool includes a tool body and a power switching device 11 for electrically connecting the tool body and a power supply device.

As shown in FIG. 1, the tool body can include a plug-in portion for connecting the power switching device 11, the plug-in portion can include two connecting pieces with opposite polarities, and the two connecting pieces with opposite polarities are respectively connected to the positive output terminal 1123a and the negative output terminal 1123b of the output terminal 1123 of the power switching device 11 with the same polarity to ensure the normal input of a working voltage.

In this disclosure, when a rated voltage of the electric tool is nV, the electric tool can be connected to different power supply devices having energy units with an output voltage of n/2V or nV through the power switching device 11.

The electric tool can be connected to a dual-voltage power supply device or a single-voltage power supply device with two energy units with an output voltage of n/2V, and in this embodiment, each energy unit with an output voltage of n/2V can include two output electrodes with opposite polarities.

As shown in FIGS. 1 and 3, when the electric tool is electrically connected to the dual-voltage power supply device/single-voltage power supply device through the power switching device 11, the power switching device 11 are respectively electrically connected to the output electrodes of the two energy units with an output voltage of n/2V through the positive terminal 1121a and the negative terminal 1121b of the first plug member 1121 and the positive terminal 1122a and the negative terminal 1122b of the second plug member 1122. At this time, the switching member 114 can be driven by the switching button 116 to move to the second position, so that the negative terminal 1121b of the first plug member 1121 and the positive terminal 1122a of the second plug member 1122 are electrically connected through the switching member 114, so as to control the series connection of two energy units with an output voltage of n/2V, the output voltage of the dual-voltage power supply device or the single-voltage power supply device is nV, which meets the rated voltage of the tool body of the electric tool and ensures the normal operation of the electric tool.

The electric tool can be connected to a dual-voltage power supply device or a single-voltage power supply device with two energy units with an output voltage of nV, and each energy unit with an output voltage of nV can include two output electrodes of opposite polarities.

As shown in FIGS. 1 and 3, when the electric tool is electrically connected to the dual-voltage power supply device/single-voltage power supply device through the power switching device 11, the switching member 114 can be controlled to move to the first position through the switching button 116. At this time, the positive terminal 1121a of the first plug member 1121 and the positive terminal 1122a of the second plug member 1122, the negative terminal 1121b of the first plug member 1121 and the negative terminal 1122b of the second plug member 1122 are electrically connected through the switching member 114; further to enable the two energy units with an output voltage of nV are connected in parallel, and the output voltage of the dual-voltage power supply device or the single-voltage power supply device is controlled to be nV, which meets the rated voltage of the tool body and ensures the normal operation of the electric tool.

The electric tool can also be connected to a single-voltage power supply device having an energy unit with an output voltage of nV, and the energy unit can include two output electrodes with opposite polarities.

As shown in FIG. 4, when the electric tool is electrically connected to the single-voltage power supply device through the power switching device 11, the switching member 114 can be controlled to move to the second position through the switching button 116. At this time, the positive terminal 1122a of the second plug member 1122 is electrically connected to the negative terminal 1121b of the first plug member 1121 through the switching member 114; further, the power switching device 11 is connected to the two terminals of the first plug member 1121 and the second plug member 1122 arranged side by side and close to each other with opposite polarities, such as the positive terminal 1122a of the second plug member 1122 and the negative terminal 1121b of the first plug member 1121 in FIG. 2 are electrically connected to the output electrode of the energy unit with an output voltage of nV, and output a voltage of nV to meet the rated voltage of the tool body , and ensure the normal operation of the electric tool.

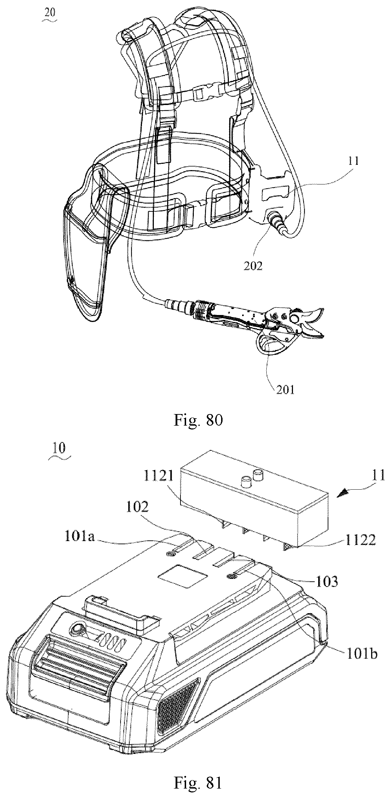

As shown in FIG. 80, an electric tool system 20 is further provided. The electric tool system 20 includes an electric energy storage system and an electric tool 201. The electric tool 201 is used to perform corresponding work tasks, and the electric energy storage system is used for providing corresponding power to the power tool 201, which ensures the normal operation of the electric tool system 20.

As shown in FIG. 80, the electric tool 201 can include a plug 202 for connecting to an electric energy storage system. The electric tool 201 may be a low-voltage electric tool for accepting a low-voltage input, and it may also be a high-voltage electric tool for accepting a high-voltage input.

As shown in FIG. 80, the electric energy storage system completes the switching of the output voltage through the power switching device 11 disposed on the electric energy storage system, so that the electric tool system 20 can match a low-voltage electric tool or a high-voltage electric tool, which effectively improves the utility of the tool system 20.

An electric tool system (not shown) further provided, includes an electric energy storage system 10 and an electric tool (not shown), wherein the electric tool is used to perform corresponding work tasks, and the electric energy storage system 10 is used for providing corresponding power to the electric tools to ensure the normal operation of the power tool system.

The electric tool can include a plug for connecting the electric energy storage system. The electric tool can be a low-voltage electric tool for receiving a low-voltage input, and it can also be a high-voltage electric tool for receiving a high-voltage input.

As shown in FIG. 81, the electric energy storage system 10 realizes the output of electric energy through the power switching device 11 provided thereon. In this embodiment, the electric energy storage system 10 can include one single energy unit, and the energy unit is provided with positive and negative electrodes 101a, 101b corresponding to the first plug member 1121 and the second plug member 1122 of the power switching device 11. A communication terminal 102 and a signal disposed between the positive electrode 101a and the negative electrode 101b for signal transmission can ensure the stability of the connection between the power switching device 11 and the energy unit while ensuring the stability of the signal transmission of the power tool system, so that the power tool system can matches the power tool of the plug matched with the output end (not shown) of the power switching device 11.

As shown in FIG. 81, in the process of describing the structure of the electric tool, the electric tool system, and the electric tool system 20, the power switching device 11 includes both the aforementioned power switching device and all power switching devices which do not depart from the scope of the appended claims.

In summary, the power switching device of the present invention is provided with a switching member that can be switched between the first position and the second position and a plug electrically connected to the switching member, and by adjusting the coupling form of different plugs, the electric energy storage system with the power switching device can realize the output of two different voltages. At the same time, the electric tool with the power switching device can be matched with a variety of power supply devices with different output voltages or with a single voltage output, which effectively increases the applicable scope of the electric energy storage system/electric tool/electric tool system with the power switching device, and the cost is reduced.

Except for the technical features described in the specification, the remaining technical features are known to those skilled in the art. In order to highlight the innovative features in the invention, the rest of the technical features will not be repeated here.

## Claims

1. A power switching device (11), comprising:
a plug (112), connected to a power supply device and comprising an output terminal (1123);
a power switching assembly (113), connected to the plug (112) and comprising a switching member (114), wherein the switching member (114) is configured for switching a coupling form of the plug (112), and
a control member (115) configured for controlling the power switching assembly (113) to move between different switching positions, the control member (115) comprising a switching button (116),
**characterized in that** the switching positions of the power switching assembly (113) are switched by pressing the switching button (116),
wherein the switching button (116) is used to control the switching member (114) to slide between a first position and a second position, wherein the switching button (116) can be in an initial position corresponding to the first position of the switching member (114) and a switching position corresponding to the second position of the switching member (114), wherein the switching button (116) includes a pressing portion and a switching portion (1161) connected to the pressing portion, the pressing portion penetrating the housing (111) to drive the switching portion (1161) to move between the initial position and the switching position under a pressing action, wherein the switching portion (1161) is formed to extend outward along an extension direction perpendicular to the pressing portion, wherein the switching portion (1161) includes two snapping arms (1162) extending towards the switching member (114) and arranged parallel to each other, wherein a distance between the two snapping arms (1162) is smaller than a length of the switching member (114) at the first position, wherein when the switching button (116) is in the initial position and the switching member (114) is in the first position, the two snapping arms (1162) are located above the switching member (114), and when the switching button (116) is moved to the switching position while it is pressed, the switching member (114) is snapped between the two snapping arms (1162) and is in the second position, wherein the switching member (114) includes an elastic member (1141), a first switching member (1142) and a second switching member (1143), the first switching member (1142) and the second switching member (1143) being connected by the elastic member (1141), wherein when the elastic member (1141) is in a compressed state under the control of the control member (115), the switching member (114) is in the second position.

2. The power switching device (11) as claimed in claim 1, wherein the first switching member (1142) being provided with a first connection end (1144) and a protrusion for connecting the elastic member (1141), wherein an end of each of the two snapping arms (1162) is provided with an inclined guide surface (1163) facing the switching member (114), and the first switching member (1142) and the second switching member (1143) are provided with a resisting surface (1146) corresponding to the inclined guide surface (1163).

3. The power switching device (11) as claimed in claim 1, wherein , the first switching member (1142) being provided with a first connection end (1144) and a protrusion for connecting the elastic member (1141), wherein two away side walls of the first switching member (1142) and the second switching member (1143) are both provided with position limiting structures (1147), and wherein the two snapping arms (1162) are provided with positioning structures (1164) corresponding to the limiting structures (1147), the limiting structure (1147) being a limiting groove and the positioning structure (1164) being a positioning protrusion corresponding to the limiting groove.

4. The power switching device (11) as claimed in any of the preceding claims, wherein the plug (112) comprises a first plug member (1121) and a second plug member (1122), and terminals with a same polarity of the first plug member (1121) and the second plug member (1122) respectively are connected through the switching member (114) when the switching member (114) is in the first position, terminals of opposite polarities of the first plug member (1121) and the second plug member (1122) respectively are connected by the switching member (114) when the switching member is in the second position.

5. The power switching device (11) as claimed in claim 4, wherein a positive output terminal (1123a) of the output terminal (1123) is electrically connected to a positive terminal of one of the first plug member (1121) and the second plug member (1122), a negative output terminal (1123b) of the output terminal (1123) is electrically connected to a negative terminal of one of the first plug member (1121) and the second plug member (1122).

6. An electric energy storage system, comprising:
the power switching device (11) of any of the preceding claims,
a first energy unit; and
a second energy unit, connected to the first energy unit through the power switching device (11), wherein the power switching device (11) is configured for changing series-parallel connections between the first energy unit and the second energy unit by a switching of switching positions.

7. The electric energy storage system as claimed in claim 6, wherein the switching member (114) is connected to electrodes with a same polarity of the first energy unit and the second energy unit individually when the switching member (114) is in the first position, so as to realize a low-voltage output from the electric energy storage system, and the switching member (114) is connected to electrodes with opposite polarities of the first energy unit and the second energy unit individually when the switching member (114) is in the second position, so as to realize a high-voltage output from the electric energy storage system.

8. An electric tool, comprising:
an electric energy storage system; and
the power switching device (11) of any one of claims 1 to 5, operatively cooperated with the electric energy storage system to make an output voltage from the electric energy storage system be matched with a rated voltage of the electric tool.

## Patentansprüche

1. Leistungsschaltvorrichtung (11), umfassend:
einen Stecker (112), der mit einer Leistungsversorgungsvorrichtung verbunden ist und einen Ausgangsanschluss (1123) umfasst;
eine Leistungsschaltanordnung (113), die mit dem Stecker (112) verbunden ist und ein Schaltelement (114) umfasst, wobei das Schaltelement (114) zum Umschalten einer Kopplungsform des Steckers (112) konfiguriert ist, und
ein Steuerelement (115), das zum Steuern der Leistungsschaltanordnung (113) konfiguriert ist, um sich zwischen verschiedenen Schaltpositionen zu bewegen, wobei das Steuerelement (115) eine Schalttaste (116) umfasst,
**dadurch gekennzeichnet, dass** die Schaltpositionen der Leistungsschaltanordnung (113) durch Drücken der Schalttaste (116) geschaltet werden,
wobei die Schalttaste (116) verwendet wird, um das Schaltelement (114) zu steuern, um sich zwischen einer ersten Position und einer zweiten Position zu verschieben, wobei sich die Schalttaste (116) in einer Ausgangsposition, die der ersten Position des Schaltelements (114) entspricht, und einer Schaltposition befinden kann, die der zweiten Position des Schaltelements (114) entspricht, wobei die Schalttaste (116) einen Druckabschnitt und einen mit dem Druckabschnitt verbundenen Schaltabschnitt (1161) beinhaltet, wobei der Druckabschnitt in das Gehäuse (111) eindringt, um den Schaltabschnitt (1161) anzutreiben, um sich unter Druckeinwirkung zwischen der Ausgangsposition und der Schaltposition zu bewegen, wobei der Schaltabschnitt (1161) gebildet ist, um sich entlang einer Erstreckungsrichtung senkrecht zum Druckabschnitt nach außen zu erstrecken, wobei der Schaltabschnitt (1161) zwei Rastarme (1162) beinhaltet, die sich in Richtung des Schaltelements (114) erstrecken und parallel zueinander angeordnet sind, wobei ein Abstand zwischen den zwei Rastarmen (1162) kleiner ist als eine Länge des Schaltelements (114) an der ersten Position, wobei, wenn sich die Schalttaste (116) in der Ausgangsposition befindet und sich das Schaltelement (114) in der ersten Position befindet, sich die zwei Rastarme (1162) über dem Schaltelement (114) befinden, und wenn die Schalttaste (116) zur Schaltposition bewegt wird, während sie gedrückt wird, das Schaltelement (114) zwischen den zwei Rastarmen (1162) einrastet, und sich in der zweiten Position befindet, wobei das Schaltelement (114) ein elastisches Element (1141), ein erstes Schaltelement (1142) und ein zweites Schaltelement (1143) beinhaltet, wobei das erste Schaltelement (1142) und das zweite Schaltelement (1143) über das elastische Element (1141) verbunden sind, wobei sich das Schaltelement (114) in der zweiten Position befindet, wenn sich das elastische Element (1141) unter der Steuerung des Steuerelements (115) in einem zusammengedrückten Zustand befindet.

2. Leistungsschaltvorrichtung (11) nach Anspruch 1, wobei das erste Schaltelement (1142) mit einem ersten Anschlussende (1144) und einem Vorsprung zum Verbinden des elastischen Elements (1141) bereitgestellt ist, wobei ein Ende jedes der zwei Rastarme (1162) mit einer geneigten Führungsoberfläche (1163) bereitgestellt ist, die dem Schaltelement (114) zugewandt ist, und das erste Schaltelement (1142) und das zweite Schaltelement (1143) mit einer Widerstandsoberfläche (1146) bereitgestellt sind, die der geneigten Führungsoberfläche (1163) entspricht.

3. Leistungsschaltvorrichtung (11) nach Anspruch 1, wobei da das erste Schaltelement (1142) mit einem ersten Anschlussende (1144) und einem Vorsprung zum Verbinden des elastischen Elements (1141) bereitgestellt ist, wobei zwei abgewandte Seitenwände des ersten Schaltelements (1142) und des zweiten Schaltelements (1143) beide mit Positionsbegrenzungsstrukturen (1147) bereitgestellt sind, und wobei die zwei Rastarme (1162) mit Positionierungsstrukturen (1164) bereitgestellt sind, die den Begrenzungsstrukturen (1147) entsprechen, die Begrenzungsstruktur (1147) eine Begrenzungsnut ist und die Positionierungsstruktur (1164) ein Positionierungsvorsprung ist, welcher der Begrenzungsnut entspricht.

4. Leistungsschaltvorrichtung (11) nach einem der vorstehenden Ansprüche, wobei der Stecker (112) ein erstes Steckerelement (1121) und ein zweites Steckerelement (1122) umfasst und Anschlüsse mit gleicher Polarität jeweils des ersten Steckerelements (1121) und des zweiten Steckerelements (1122) über das Schaltelement (114) verbunden sind, wenn sich das Schaltelement (114) in der ersten Position befindet, Anschlüsse mit entgegengesetzten Polaritäten jeweils des ersten Steckerelements (1121) und des zweiten Steckerelements (1122) durch das Schaltelement (114) verbunden sind, wenn sich das Schaltelement in der zweiten Position befindet.

5. Leistungsschaltvorrichtung (11) nach Anspruch 4, wobei ein positiver Ausgangsanschluss (1123a) des Ausgangsanschlusses (1123) elektrisch mit einem positiven Anschluss eines des ersten Steckerelements (1121) und des zweiten Steckerelements (1122) verbunden ist, ein negativer Ausgangsanschluss (1123b) des Ausgangsanschlusses (1123) elektrisch mit einem negativen Anschluss eines des ersten Steckerelements (1121) und des zweiten Steckerelements (1122) verbunden ist.

6. Elektrisches Energiespeichersystem, umfassend:
die Leistungsschaltvorrichtung (11) nach einem der vorstehenden Ansprüche,
eine erste Energieeinheit; und
eine zweite Energieeinheit, die über die Leistungsschaltvorrichtung (11) mit der ersten Energieeinheit verbunden ist, wobei die Leistungsschaltvorrichtung (11) zum Ändern von Serien-Parallel-Verbindungen zwischen der ersten Energieeinheit und der zweiten Energieeinheit durch Umschalten von Schaltpositionen konfiguriert ist.

7. Elektrisches Energiespeichersystem nach Anspruch 6, wobei das Schaltelement (114) mit Elektroden mit gleicher Polarität der ersten Energieeinheit und der zweiten Energieeinheit einzeln verbunden ist, wenn sich das Schaltelement (114) in der ersten Position befindet, um einen Niederspannungsausgang aus dem elektrischen Energiespeichersystem zu realisieren, und das Schaltelement (114) mit Elektroden mit entgegengesetzten Polaritäten der ersten Energieeinheit und der zweiten Energieeinheit einzeln verbunden ist, wenn sich das Schaltelement (114) in der zweiten Position befindet, um einen Hochspannungsausgang aus dem elektrischen Energiespeichersystem zu realisieren.

8. Elektrowerkzeug, umfassend:
ein elektrisches Energiespeichersystem; und
die Leistungsschaltvorrichtung (11) nach einem der Ansprüche 1 bis 5, die betrieblich mit dem elektrischen Energiespeichersystem zusammenwirkt, um eine Ausgangsspannung aus dem elektrischen Energiespeichersystem auf eine Nennspannung des Elektrowerkzeugs anzugleichen.

## Revendications

1. Dispositif de commutation d'alimentation (11), comprenant :
une fiche (112), connectée à un dispositif d'alimentation électrique et comprenant une borne de sortie (1123) ;
un ensemble de commutation d'alimentation (113), connecté à la fiche (112) et comprenant un élément de commutation (114), dans lequel l'élément de commutation (114) est configuré pour commuter une forme de couplage de la fiche (112), et
un élément de commande (115) configuré pour commander à l'ensemble de commutation d'alimentation (113) de se déplacer entre différentes positions de commutation, l'élément de commande (115) comprenant un bouton de commutation (116),
**caractérisé en ce que** les positions de commutation de l'ensemble de commutation d'alimentation (113) sont commutées en appuyant sur le bouton de commutation (116),
dans lequel le bouton de commutation (116) est utilisé pour commander à l'élément de commutation (114) de coulisser entre une première position et une seconde position, dans lequel le bouton de commutation (116) peut être dans une position initiale correspondant à la première position de l'élément de commutation (114) et une position de commutation correspondant à la seconde position de l'élément de commutation (114), dans lequel le bouton de commutation (116) inclut une partie de pression et une partie de commutation (1161) connectée à la partie de pression, la partie de pression pénétrant dans le boîtier (111) pour amener la partie de commutation (1161) à se déplacer entre la position initiale et la position de commutation sous l'effet d'une action de pression, dans lequel la partie de commutation (1161) est formée pour s'étendre vers l'extérieur le long d'une direction d'extension perpendiculaire à la partie de pression, dans lequel la partie de commutation (1161) inclut deux bras d'encliquetage (1162) s'étendant vers l'élément de commutation (114) et agencés parallèlement l'un à l'autre, dans lequel une distance entre les deux bras d'encliquetage (1162) est inférieure à une longueur de l'élément de commutation (114) dans la première position, dans lequel, lorsque le bouton de commutation (116) est dans la position initiale et l'élément de commutation (114) est dans la première position, les deux bras d'encliquetage (1162) sont situés au-dessus de l'élément de commutation (114) et, lorsque le bouton de commutation (116) est déplacé vers la position de commutation lorsqu'il est enfoncé, l'élément de commutation (114) est encliqueté entre les deux bras d'encliquetage (1162) et est dans la second position, dans lequel l'élément de commutation (114) inclut un élément élastique (1141), un premier élément de commutation (1142) et un second élément de commutation (1143), le premier élément de commutation (1142) et le second élément de commutation (1143) étant connectés par l'élément élastique (1141), dans lequel, lorsque l'élément élastique (1141) est dans un état comprimé sous l'effet de la commande de l'élément de commande (115), l'élément de commutation (114) est dans la second position.

2. Dispositif de commutation d'alimentation (11) selon la revendication 1, dans lequel le premier élément de commutation (1142) est doté d'une première extrémité de connexion (1144) et d'une saillie destinée à se connecter à l'élément élastique (1141), dans lequel une extrémité de chacun des deux bras d'encliquetage (1162) est dotée d'une surface de guidage inclinée (1163) faisant face à l'élément de commutation (114), et le premier élément de commutation (1142) et le second élément de commutation (1143) sont dotés d'une surface de résistance (1146) correspondant à la surface de guidage inclinée (1163).

3. Dispositif de commutation d'alimentation (11) selon la revendication 1, dans lequel le premier élément de commutation (1142) est doté d'une première extrémité de connexion (1144) et d'une saillie destinée à se connecter à l'élément élastique (1141), dans lequel deux parois latérales opposées du premier élément de commutation (1142) et du second élément de commutation (1143) sont toutes deux dotées de structures de limitation de position (1147), et dans lequel les deux bras d'encliquetage (1162) sont dotés de structures de positionnement (1164) correspondant aux structures de limitation (1147), la structure de limitation (1147) étant une rainure de limitation et la structure de positionnement (1164) étant une saillie de positionnement correspondant à la rainure de limitation.

4. Dispositif de commutation d'alimentation (11) selon l'une quelconque des revendications précédentes, dans lequel la fiche (112) comprend un premier élément de fiche (1121) et un second élément de fiche (1122), et des bornes de même polarité du premier élément de fiche (1121) et du second élément de fiche (1122) sont respectivement connectées par l'intermédiaire de l'élément de commutation (114) lorsque l'élément de commutation (114) est dans la première position, des bornes de polarités opposées du premier élément de fiche (1121) et du second élément de fiche (1122) sont respectivement connectées par l'élément de commutation (114) lorsque l'élément de commutation est dans la seconde position.

5. Dispositif de commutation d'alimentation (11) selon la revendication 4, dans lequel une borne de sortie positive (1123a) de la borne de sortie (1123) est connectée électriquement à une borne positive de l'un du premier élément de fiche (1121) et du second élément de fiche (1122), une borne de sortie négative (1123b) de la borne de sortie (1123) est connectée électriquement à une borne négative de l'un du premier élément de fiche (1121) et du second élément de fiche (1122).

6. Système de stockage d'énergie électrique, comprenant :
le dispositif de commutation d'alimentation (11) selon l'une quelconque des revendications précédentes,
une première unité d'énergie ; et
une seconde unité d'énergie, connectée à la première unité d'énergie par l'intermédiaire du dispositif de commutation d'alimentation (11), dans lequel le dispositif de commutation d'alimentation (11) est configuré pour changer des connexions série-parallèle entre la première unité d'énergie et la seconde unité d'énergie par une commutation de positions de commutation.

7. Système de stockage d'énergie électrique selon la revendication 6, dans lequel l'élément de commutation (114) est connecté à des électrodes de même polarité de la première unité d'énergie et de la seconde unité d'énergie individuellement lorsque l'élément de commutation (114) est dans la première position, de manière à réaliser une sortie basse tension du système de stockage d'énergie électrique, et l'élément de commutation (114) est connecté à des électrodes de polarités opposées de la première unité d'énergie et de la seconde unité d'énergie individuellement lorsque l'élément de commutation (114) est dans la seconde position, de manière à réaliser une sortie haute tension du système de stockage d'énergie électrique.

8. Outil électrique, comprenant :
un système de stockage d'énergie électrique ; et
le dispositif de commutation d'alimentation (11) selon l'une quelconque des revendications 1 à 5, coopérant fonctionnellement avec le système de stockage d'énergie électrique pour faire correspondre une tension de sortie du système de stockage d'énergie électrique et une tension nominale de l'outil électrique.
